(19) Europäisches Patentamt / European Patent Office / Office européen des brevets

(11) **EP 4 557 412 A1**

(12) **EUROPEAN PATENT APPLICATION**
published in accordance with Art. 153(4) EPC

(43) Date of publication:
   **21.05.2025 Bulletin 2025/21**

(21) Application number: **23839671.7**

(22) Date of filing: **13.07.2023**

(51) International Patent Classification (IPC):
   $H01M\ 8/18^{(2006.01)}$    $C01B\ 3/04^{(2006.01)}$
   $C25B\ 1/04^{(2021.01)}$    $C25B\ 9/00^{(2021.01)}$
   $H01M\ 8/00^{(2016.01)}$

(52) Cooperative Patent Classification (CPC):
   **C01B 3/04; C25B 1/04; C25B 9/00; H01M 8/00; H01M 8/18; Y02E 60/50**

(86) International application number:
   **PCT/JP2023/025852**

(87) International publication number:
   **WO 2024/014499 (18.01.2024 Gazette 2024/03)**

(84) Designated Contracting States:
   **AL AT BE BG CH CY CZ DE DK EE ES FI FR GB GR HR HU IE IS IT LI LT LU LV MC ME MK MT NL NO PL PT RO RS SE SI SK SM TR**
   Designated Extension States:
   **BA**
   Designated Validation States:
   **KH MA MD TN**

(30) Priority: **13.07.2022  JP 2022112367**

(71) Applicant: **Kyoto University**
   **Kyoto-shi, Kyoto 606-8501 (JP)**

(72) Inventors:
   • **ASHIDA, Ryuichi**
     **Kyoto-shi, Kyoto 606-8501 (JP)**
   • **KIMURA, Ayano**
     **Kyoto-shi, Kyoto 606-8501 (JP)**
   • **MIZUTANI, Yuta**
     **Kyoto-shi, Kyoto 606-8501 (JP)**

(74) Representative: **Zimmermann & Partner**
   **Patentanwälte mbB**
   **Postfach 330 920**
   **80069 München (DE)**

(54) **METHOD FOR GENERATING ELECTRIC POWER OR PRODUCING HYDROGEN, AND ENERGY CONVERSION SYSTEM**

(57)    A method for generating power or producing hydrogen from a carbon source, the method including a chemical conversion step of making, in a chemical conversion unit, a mixture obtained by mixing a solution containing an intermediate medium with a carbon source to react at a temperature at which chemical exergy of the carbon source exceeds chemical exergy in a reduced state of the intermediate medium to reduce the intermediate medium while oxidizing the carbon source, an electrochemical conversion step of bringing the intermediate medium reduced at the chemical conversion step into contact with an anode of a battery structure in an electrochemical conversion unit including the battery structure, and bringing oxygen or air into contact with a cathode of the battery structure to generate power, or bringing water into contact to produce hydrogen, and a reuse step of returning a solution containing the intermediate medium after the electrochemical conversion step to the mixture, and an energy conversion system.

*FIG. 1*

**Description**

TECHNICAL FIELD

The present invention relates to a method for generating power or producing hydrogen and an energy conversion system.

BACKGROUND ART

High-grade fossil fuels such as coal and petroleum have been widely used as carbon sources to be converted into electric power in power plants and the like because large energy can be easily extracted therefrom by combustion, but in recent years, there has been a problem of resource depletion.
In contrast, hydrogen energy having a high exergy rate and the like have attracted attention as alternative energy for fossil fuels.
In power generation or production of a (secondary) energy source having a high exergy rate, energy conversion systems and methods having high energy conversion efficiency of resources have been proposed.
For example, systems and methods utilizing waste heat (also referred to as exhaust heat), which is low-temperature energy that has not been usable in power plants and the like until now, are known (Patent Documents 1 and 2).
Patent Document 1 discloses a waste heat utilizing hydrogen producing apparatus including a thermoelectric generation device that includes a high-temperature side exposed to a high temperature and a low-temperature side exposed to a low temperature and converts thermal energy into electric energy, a water vapor generation device for obtaining water vapor, and an electrochemical device that produces hydrogen from the water vapor obtained by the water vapor generation device by electrolysis using the electric energy obtained by the thermoelectric generation device, in which waste heat emitted in an iron making process is utilized as an energy source.
Patent Document 2 discloses a method for recovering exhaust heat in which carbon dioxide ($CO_2$) and hydrogen ($H_2$) are generated by using exhaust heat at 150°C or lower in an endothermic reforming reaction of methanol ($CH_3OH$), and thermal energy of the exhaust heat having a low exergy rate is converted into hydrogen ($H_2$), which is a combustible substance having a higher exergy rate, and recovered.
A method for utilizing a low-grade carbon source such as brown coal or biomass is also known (refer to Patent Documents 3 and 4).
Patent Document 3 discloses a method for producing hydrogen by a thermochemical decomposition reaction between water and carbon using cerium oxide as a reaction medium.
Patent Document 4 discloses a hydrogen production method for producing hydrogen from biomass and iron oxide, the method including a reduction step of heating a mixture of iron oxide particles and biomass to reduce iron oxide, and a first oxidation step of bringing a solid phase containing metallic iron and carbon obtained at the reduction step into contact with water vapor at a temperature of 600°C or lower to generate hydrogen gas, in which the solid phase containing iron oxide obtained at the first oxidation step is supplied to the reduction step to circulate iron and iron oxide.
In addition, a method for producing hydrogen by performing electrolysis of water using electrons obtained from an alkali metal and a metal having a low ionization tendency is known. For example, Patent Document 5 discloses a hydrogen production method including an electrochemical oxidation reduction step of emitting electrons from an alkali metal and producing a fused body of the alkali metal and carbon or a metal by a battery reaction using the alkali metal for a negative electrode and carbon or a metal having a lower ionization tendency than the alkali metal for a positive electrode, a hydrogen generation step of electrolyzing water utilizing the electrons emitted at the electrochemical oxidation reduction step to generate hydrogen, and a thermochemical reduction step of heating the fused body to reduce to the alkali metal and carbon or metal.

PRIOR ART REFERENCES

Patent Documents

Patent Document 1: JP 2011-208242 A

Patent Document 2: JP 05-170401 A

Patent Document 3: JP 10-251001 A

Patent Document 4: JP 2008-137864 A

Patent Document 5: JP 2016-121036 A

SUMMARY OF THE INVENTION

Object to be Achieved by the Invention

However, all of the devices and methods disclosed in Patent Documents 1 to 5 required further improvement in energy conversion efficiency. In particular, means for efficiently utilizing a low-grade carbon source (for example, brown coal, peat, biomass and the like having a high moisture content) as an energy source, such as a carbon source having a high moisture content, have not been known so far.

An object of waste heat utilization by the conventional method is usually waste heat at a high temperature such as 600°C or higher, and it has been difficult to utilize waste heat at a low temperature such as 350°C or lower.

In addition, in the conventional method for utilizing a carbon source, since the carbon source is once converted into thermal energy, there has been a problem that energy conversion efficiency is low.

An object of the present invention is to provide a method for generating power or producing hydrogen and an energy conversion system excellent in energy conversion efficiency even when a low-grade carbon source is used and low-temperature waste heat is used.

Means for Achieving the Object

In the present invention, power generation or hydrogen production is performed via energy conversion from a carbon source to an intermediate medium by a solution reaction. In this manner, in the present invention, since power generation or hydrogen production can be performed from the carbon source without passing through the form of thermal energy, energy conversion efficiency can be improved.

In the present invention, low-temperature waste heat can be used for environmental temperature control of the reaction and the like.

Furthermore, it is also possible to further improve the energy conversion efficiency by utilizing the temperature change of the chemical exergy of the carbon source and the intermediate medium. Specifically, according to the present invention, it has been found that by combining a chemical conversion unit that performs an oxidation reduction reaction of a carbon source and an intermediate medium, and an electrochemical conversion unit that performs power generation or production of a secondary energy source having a high exergy rate using an intermediate medium in a reduced state, and selecting a reaction temperature of the chemical conversion unit, the chemical exergy in the reduced state of the intermediate medium can be made smaller than the chemical exergy of the carbon source and can solve the above-described problem, and the above problem has been solved.

A configuration of the present invention, which is a specific means for solving the above-described problem, and a preferred configuration of the present invention will be described below.

[1] A method for generating power or producing hydrogen from a carbon source, the method including a chemical conversion step of making, in a chemical conversion unit, a mixture obtained by mixing a solution containing an intermediate medium with the carbon source to react at a temperature at which chemical exergy of the carbon source exceeds chemical exergy in a reduced state of the intermediate medium to reduce the intermediate medium while oxidizing the carbon source, an electrochemical conversion step of bringing a solution containing the intermediate medium reduced at the chemical conversion step into contact with an anode of a battery structure in an electrochemical conversion unit including the battery structure, or using a base material on which the intermediate medium reduced at the chemical conversion step is precipitated as the anode of the battery structure, and bringing oxygen or air into contact with a cathode of the battery structure to generate power, or bringing water into contact to produce hydrogen, and a reuse step of returning a solution containing the intermediate medium after the electrochemical conversion step to the mixture.

[2] The method for generating power or producing hydrogen according to [1], wherein at the chemical conversion step, the intermediate medium in the reduced state is precipitated on the base material, and at the electrochemical conversion step, the base material on which the intermediate medium is precipitated is used as the anode of the battery structure in the electrochemical conversion unit.

[3] The method for generating power or producing hydrogen according to [1] or [2], wherein a reaction temperature at the chemical conversion step is 350°C or lower.

[4] The method for generating power or producing hydrogen according to [1] or [2],

wherein the intermediate medium contains at least one element out of V, Cr, Mn, Fe, Cu, or Zn.

[5] The method for generating power or producing hydrogen according to [1] or [2], wherein $CO_2$ generated by an oxidation reduction reaction in the chemical conversion unit is recovered.

[6] An energy conversion system including a chemical conversion unit that reduces an intermediate medium from an oxidized state to a reduced state while oxidizing a carbon source, and an electrochemical conversion unit that includes one electrode, the other electrode, and an energization unit that connects the one electrode and the other electrode, and reduces a material to be reduced at the other electrode while oxidizing the intermediate medium from a reduced state to an oxidized state at the one electrode, in which in the chemical conversion unit, a reduction reaction is performed at a temperature at which chemical exergy of the carbon source exceeds chemical exergy in the reduced state of the intermediate medium, and the electrochemical conversion unit outputs at least one of a reductant of the material to be reduced and electric power to outside.

[7] The energy conversion system according to [6], including at least one of a plurality of chemical conversion units or a plurality of electrochemical conversion units.

[8] The energy conversion system according to [6], including a plurality of electrochemical conversion units, wherein a part of the electrochemical conversion units outputs hydrogen as the material to be reduced to the outside, another part of the electrochemical conversion units outputs electric power to the outside, and the electric power is used as auxiliary power for outputting the hydrogen to the outside.

[9] The energy conversion system according to [6], wherein $CO_2$ generated by an oxidation reduction reaction in the chemical conversion unit is recovered.

Effects of the Invention

In the present invention, since power generation or hydrogen production can be performed through energy conversion from a carbon source to an intermediate medium by solution reaction without through a form of thermal energy from the carbon source, energy conversion efficiency can be improved. This energy conversion can also be performed using low-temperature waste heat.

In the present invention, for example, even a low-grade carbon source that is difficult to be converted into thermal energy by combustion or the like can be used.

Furthermore, it is possible to select whether to directly obtain electricity (generate power) or to produce hydrogen as a secondary energy source according to the demand.

As described above, according to the present invention, it is possible to provide a method for generating power or producing hydrogen and an energy conversion system excellent in energy conversion efficiency even when a low-grade carbon source is used and low-temperature waste heat is used.

In addition, since $CO_2$ generated by the method of the present invention can be easily recovered with high purity, an environmental load is small, and secondary use of $CO_2$ is also possible as necessary.

BRIEF DESCRIPTION OF THE DRAWINGS

Fig. 1 is a schematic diagram of an example of an energy conversion system of the present invention.
Fig. 2 is a schematic diagram of an example of a first preferred embodiment of an energy conversion system of the present invention.
Fig. 3 is a schematic graph of a relationship between a temperature and chemical exergy of an intermediate medium used in the first preferred embodiment.
Fig. 4 is a schematic diagram of a mode of recovering a $CO_2$ gas in the first preferred embodiment.
Fig. 5 is a schematic diagram comparing energy conversion efficiency between a conventional method and a proposed method using the first preferred embodiment of the present invention.
Fig. 6(a) is a view illustrating a magnitude relationship of chemical exergy of a carbon source (brown coal) and the intermediate medium at three temperatures. Fig. 6(b) is a graph illustrating a change in temperature of the chemical exergy of the carbon source (brown coal) and some intermediate media.
Fig. 7 is a schematic diagram of an example of a case where (B-1) power generation during power shortage is performed in a second preferred embodiment of an energy conversion system of the present invention.
Fig. 8 is a schematic diagram of a proposed method for recovering a $CO_2$ gas in a case where (B-1) power generation during power shortage is performed, and a bar graph in comparison with the conventional method in the second preferred embodiment.
Fig. 9 is a schematic diagram of an example of a case where (B-2) hydrogen production during power excess is performed in the second preferred embodiment of the energy conversion system of the present invention.

Fig. 10 is a schematic diagram of a proposed method for recovering a $CO_2$ gas in a case where (B-2) hydrogen production during power excess is performed, and a bar graph in comparison with the conventional method in the second preferred embodiment.

Fig. 11(A) is a bar graph illustrating a yield of a synthesis gas in a case where a chemical conversion unit is set to a reaction temperature of 300°C. Fig. 11(B) is a bar graph illustrating the yield of the synthesis gas in a case where the chemical conversion unit is set to a reaction temperature of 250°C.

Fig. 12(A) is an XRD pattern of a solid product in a case of reducing $Cr_2(SO_4)_3$. Fig. 12(B) is an XRD pattern of the solid product in a case of reducing $Cr(OH)_3$.

Fig. 13(A) is a schematic diagram of a material balance in Evaluation Example 1 of Example 1. Fig. 13(B) is a schematic diagram of an exergy balance in Evaluation Example 1 of Example 1. Fig. 13(C) is a schematic diagram of an example of an exergy balance in a combustion process.

Fig. 14(A) is a schematic diagram of a material balance in Evaluation Example 1 of Example 1. Fig. 14(B) is a schematic diagram of an exergy balance in Evaluation Example 1 of Example 1. Fig. 14(C) is a schematic diagram of an example of an exergy balance in a gasification process.

Fig. 15 is a schematic diagram of an experimental device used in Evaluation Example 3 as a chemical conversion unit of Example 2.

Fig. 16 is a photograph of a sample of a chemical conversion unit before and after a reaction under specific reaction conditions in Evaluation Example 3, and a graph of a relationship between a wavelength and absorbance measured by spectrophotometer.

Fig. 17(A) is a graph of a relationship between a reaction time and a conversion rate of $VO^{2+}$ ions $X_{VO}^{2+}$ under some reaction conditions in Evaluation Example 3. Fig. 17(B) is a graph of a relationship between the conversion rate of $VO^{2+}$ ions $X_{VO}^{2+}$ and electrochemical conversion E.

Fig. 18(A) is an XRD pattern of a solid product in Evaluation Example 4. Fig. 18(B) is a photograph of a solid product under specific conditions in Evaluation Example 4.

Fig. 19 is a bar graph illustrating a yield of a synthesis gas in Evaluation Example 4.

Fig. 20 is a schematic diagram of a model used for reaction rate analysis in Evaluation Example 5.

Fig. 21 is obtained by plotting experimental values in a demonstration experiment on a graph in which a relationship between a reaction time and a conversion rate of $VO^{2+}$ ions $X_{VO}^{2+}$ is described on the basis of a calculated value of a reaction rate in Evaluation Example 5.

Fig. 22 is a schematic diagram of a reactor design in a chemical conversion unit used in Evaluation Example 6.

Fig. 23 is a schematic diagram illustrating a material balance, power generation efficiency, and a reactor size at that time in Evaluation Example 6 of Example 2.

Fig. 24 is a schematic diagram of the energy conversion system used in Evaluation Example 7.

Fig. 25 is a graph illustrating a relationship between efficiency of an electrolytic reaction and the energy conversion efficiency of the energy conversion system used in Evaluation Example 7.

Fig. 26 is a graph illustrating a relationship between a current density and a voltage in a case of producing hydrogen by a method of Example 2 and a conventional method.

Fig. 27(A) is a graph illustrating a relationship between a current density and an electrolytic reaction in a case of producing hydrogen by a method of Example 2 and a conventional method. Fig. 27(B) is a graph illustrating a relationship between the current density and the energy conversion efficiency in a case of producing hydrogen by the method of Example 2 and the conventional method.

Fig. 28 is a graph illustrating a relationship between an actually measured value of a battery voltage ($E_{Cell}$[V]) and overall power generation efficiency with respect to a reduction rate from $VO^{2+}$ having an oxidation number of 4, which is an intermediate medium, to $V^{3+}$ having an oxidation number of 3.

Fig. 29 is a graph (I-V curve) illustrating a relationship between a current (I) and a voltage (V) during power generation in Evaluation Example 10.

Fig. 30 is a graph illustrating a relationship between a current density and a voltage in a case of producing hydrogen by a method of Evaluation Example 11 and a conventional method.

MODES FOR CARRYING OUT THE INVENTION

Hereinafter, the present invention will be described in detail. The components described below may be described on the basis of representative embodiments and specific examples, but the present invention is not limited to such embodiments. Note that, in the present specification, a numerical range represented using "to" means a range including numerical values described before and after "to" as a lower limit value and an upper limit value, respectively.

[Method for Generating Power or Producing Hydrogen]

A method for generating power or producing hydrogen of the present invention is a method for generating power or producing hydrogen from a carbon source, the method including a chemical conversion step of making, in a chemical conversion unit, a mixture obtained by mixing a solution containing an intermediate medium with the carbon source to react at a temperature at which chemical exergy of the carbon source exceeds chemical exergy in a reduced state of the intermediate medium to reduce the intermediate medium while oxidizing the carbon source, an electrochemical conversion step of bringing a solution containing the intermediate medium reduced at the chemical conversion step into contact with an anode of a battery structure in an electrochemical conversion unit including the battery structure, or using a base material on which the intermediate medium reduced at the chemical conversion step is precipitated as the anode of the battery structure, and bringing oxygen or air into contact with a cathode of the battery structure to generate power, or bringing water into contact to produce hydrogen, and a reuse step of returning a solution containing the intermediate medium after the electrochemical conversion step to the mixture.

(Carbon Source)

A carbon source is not particularly limited.

In the present invention, a low-grade carbon source can be utilized as the carbon source. As the carbon source, a low-grade fossil fuel, biomass or plastic, which is a carbon source other than the fossil fuel, or the like is preferable, and brown coal, peat, biomass, polymer, plastic, (organic) sludge, or organic waste discharged from a manufacturing industry is more preferable.

As the low-grade fossil fuel, brown coal is preferable. The brown coal refers to coal having a calorific value of 5,800 kcal/kg or larger and smaller than 7,300 kcal/kg on a pure coal basis. The brown coal is preferably non-caking having no caking property. The brown coal has a carbon content of about 65 to 78 mass%, is brown in appearance, and contains a large amount of moisture.

The biomass means a renewable biologically-derived organic resource excluding a fossil resource; unlike a fossil fuel that discharges a large amount of $CO_2$ into the atmosphere, the biomass is reproducible and carbon neutral. The biomass is roughly divided into dry biomass (wood, bark, waste paper, sawdust or the like) and wet biomass (sludge, manure, garbage, waterweed or the like). Note that, a moisture content of a live tree is about 50 mass%.

The polymer is not particularly limited, and for example, a polymer compound containing a carbon atom can be used, and examples thereof include an organic resin, a fiber, rubber, paint and the like.

The plastic is preferably one obtained by reusing waste plastic and the like. As the waste plastic, one from which a gas other than $CO_2$ is not generated during reaction is preferable.

The organic waste discharged from the manufacturing industry means an organic waste widely discharged from the manufacturing industry. Note that, the organic waste is not particularly limited, and examples thereof include an industrial waste, an industrial waste, a chemical waste, a food waste and the like. Here, the manufacturing industry is a type of industry that manufactures things, and is a concept widely including a chemical manufacturing industry, a metal manufacturing industry, a machine manufacturing industry, a food manufacturing industry, a clothing manufacturing industry and the like.

The carbon source used in the present invention is not limited in moisture content. For example, even a carbon source having a moisture content of more than 60 mass%, which is generally considered to be used with difficulty in combustion reaction, can be used in the present invention.

The carbon source is preferably a liquid or solid at room temperature (25°C).

As a property of the carbon source, a solid or aqueous solution is preferable. The solid is preferably, for example, a powder.

Hereinafter, examples of a moisture content of a solid fuel as the carbon source and a $VO^{2+}$ reaction rate at 250°C for 30 minutes will be described; this reaction rate is merely referred to as an index of a reaction rate of the solid fuel in the present invention, and any solid fuel can be utilized in the present invention. The carbon source in the present invention is not limited thereto.

[Table 1]

| Table Moisture content of solid fuel, and $VO^{2+}$ reaction rate at 250°c for 30 minutes | | |
|---|---|---|
| Solid fuel | Moisture content [% wet basis] | $VO^{2+}$ reaction rate [%] |
| Cellulose | 4.4 | 60.0 |
| Woody biomass 1 | 6.1 | 50.9 |
| Woody biomass 2 | 7.8 | 34.6 |

(continued)

| Table Moisture content of solid fuel, and $VO^{2+}$ reaction rate at 250°c for 30 minutes | | |
|---|---|---|
| Solid fuel | Moisture content [% wet basis] | $VO^{2+}$ reaction rate [%] |
| Woody biomass 3 | 8.5 | 32.1 |
| Agriculture waste | 6.7 | 41.8 |
| Food waste | 7.1 | 46.1 |
| Organic sludge | 11.7 | 32.4 |
| Peat | 12.5 | 29.9 |
| Brown coal | 42.7 | 21.0 |
| Bituminous coal | 0.9 | 5.6 |

(Chemical Conversion Step)

The method for generating power or producing hydrogen of the present invention includes the chemical conversion step of making the mixture obtained by mixing the solution containing the intermediate medium with the carbon source to react at the temperature at which the chemical exergy of the carbon source exceeds the chemical exergy in the reduced state of the intermediate medium, and reducing the intermediate medium while oxidizing the carbon source in the chemical conversion unit.

<Intermediate Medium>

At the chemical conversion step, the mixture obtained by mixing the solution containing the intermediate medium with the carbon source is used.

Examples of the intermediate medium include a single metal, a metal compound, a material containing a metal element such as a metal ion, a metal complex, or a mixture containing the metal element. The intermediate medium can be subjected to oxidation reduction and can take at least two states of the intermediate medium in the oxidized state and the intermediate medium in the reduced state. The intermediate medium in the oxidized state and the intermediate medium in the reduced state can be reversibly changed.

The oxidation/reduction of the intermediate medium refers to reaction involving a change in valence of the metal element.

The intermediate medium in the oxidized state and the intermediate medium in the reduced state may be in a relatively oxidized state or reduced state, respectively. For example, the intermediate medium in the reduced state may contain a metal element having an oxidation number of larger than 0 or a metal element having an oxidation number of 0. More specifically, in a case where the intermediate medium in the oxidized state is a Cr element having an oxidation number of 3, the intermediate medium in the reduced state may be a Cr element having an oxidation number of 2, or may be a Cr single metal having an oxidation number of 0.

The intermediate medium may contain the metal ion as a part of the complex, for example as a central metal or a ligand.

The intermediate medium in the oxidized state is preferably a metal compound, a metal ion, or a mixture containing them, and more preferably the metal compound or the metal ion. The metal compound contained in the intermediate medium in the oxidized state is, for example, a metal oxide (ion).

The metal element used in the intermediate medium is not limited as long as the chemical exergy in the reduced state of the intermediate medium can be made smaller than the chemical exergy of the carbon source at a reaction temperature of the chemical conversion unit.

The intermediate medium preferably contains a transition metal element, more preferably contains at least one element out of V, Cr, Mn, Fe, Cu, and Zn, and particularly preferably contains at least one element out of V, Cr, and Cu.

Out of them, the metal element contained in the intermediate medium is preferably reduced as $VO^{2+}\rightarrow V^{3+}$, $Cr^{3+}\rightarrow Cr^{2+}$, and $Cu^{2+}\rightarrow Cu$ by the carbon source.

Here, the reaction temperature can be maintained by its own reaction heat in some cases, and a reduction reaction is preferably an exothermic reaction from the viewpoint of minimizing the utilization of external energy such as waste heat.

From the viewpoint of taking in and utilizing waste heat as energy, the reduction reaction is preferably an endothermic reaction (for example, $Cr^{3+}\rightarrow Cr^{2+}$).

In addition, $Cr^{3+}\rightarrow Cr^{2+}$ is preferable in that the chemical exergy is greatly improved when the temperature at the time of reduction is returned to normal temperature.

In contrast, in $VO^{2+}\rightarrow V^{3+}$, since the change in chemical exergy due to temperature is small and the chemical exergy is rather higher at a high temperature, it is preferable from the viewpoint that chemical conversion and electrochemical conversion can be efficiently performed in a state in which the temperature is maintained high by utilizing waste heat or the like with emphasis on the reaction rate. Note that, since the reduction reaction of the chemical conversion unit is the exothermic reaction, a method for externally heating only at the start of the reaction can be adopted.

The intermediate medium in the oxidized state is preferably a liquid or a solid at a room temperature, and more preferably a liquid.

<Reduction Method (Chemical Conversion Unit)>

At the chemical conversion step, by making the mixture obtained by mixing the solution containing the intermediate medium with the carbon source to react at the temperature at which the chemical exergy of the carbon source exceeds the chemical exergy in the reduced state of the intermediate medium in the chemical conversion unit, the carbon source is oxidized and the intermediate medium is reduced.

The present invention does not require conversion into thermal energy of the carbon source, so that an energy loss is minimized (exergy change is small). In the present invention, the chemical conversion unit performs the reaction at a reaction temperature lower than the temperature generated by the combustion reaction of the carbon source.

In the present specification, the combustion reaction refers to a reaction in which a carbon source emits heat and light to combine with oxygen.

Specifically, for example, at the chemical conversion step, an intermediate medium-containing solution and the carbon source powder (or liquid) are mixed in the chemical conversion unit, and the temperature of the mixture is raised to a predetermined temperature. The predetermined temperature is a temperature equal to or higher than a temperature at which the chemical exergy of the carbon source exceeds the chemical exergy in the reduced state of the intermediate medium. The predetermined temperature is preferably set as low as possible from the viewpoint that the loss associated with the reaction increases as a chemical exergy difference increases, a high pressure is required to avoid boiling of the solution and the like, but can be appropriately set in consideration of the reaction rate. On a chemical equilibrium side, in a case of using $VO^{2+} \rightarrow V^{3+}$ in which reduction proceeds even at a room temperature, it is preferable to appropriately raise the temperature in order to start the reaction and increase the reaction rate. Note that, in a case where the reduction reaction is the exothermic reaction, heating from outside is required only at the start, and when the reaction starts, the temperature can be maintained by the reaction heat.

Specifically, the reaction temperature at the chemical conversion step is preferably 350°C or lower. The reaction temperature may be determined in consideration of the types of the carbon source and the intermediate medium and the like. As the pressure during the reaction, a value at which the aqueous solution does not evaporate can be selected. For example, pressurization at 15 MPa (150 atm) is required in order not to evaporate the aqueous solution at 350°C.

At the chemical conversion step, the intermediate medium-containing solution and the carbon source powder (or liquid) are mixed, and the reaction between the intermediate medium and the carbon source proceeds in the liquid. By such a mode of allowing the reaction to proceed in the liquid, the intermediate medium in the reduced state can be easily taken out, and the generated gas can be easily recovered while avoiding mixing with surrounding air.

In principle, only a $CO_2$ gas is generated by the reaction between the intermediate medium and the carbon source in the chemical conversion unit. In an actual operation, CO and water vapor might be mixed, but there is no problem because a CO gas easily becomes $CO_2$, and water vapor can be easily separated as a liquid when the temperature is lowered. As a result, the obtained $CO_2$ can be recovered with a purity of 99.9% or more or 99.99% or more.

At the chemical conversion step, in a case where the intermediate medium in the reduced state is a solid, the intermediate medium in the reduced state may be precipitated on a base material separately provided in the chemical conversion unit. In such a mode, the intermediate medium in the reduced state precipitated on the base material and the substrate may be used as an electrode in an electrochemical conversion unit to be described later.

Specifically, for example, there is a mode in which the intermediate medium, which is the metal ion, is reduced to metal and precipitated on the base material.

At the chemical conversion step, it is not necessary to completely terminate the reduction reaction of the intermediate medium in the mixture. It is sufficient if exergy from the carbon source can be taken in as much as necessary (that is, when the oxidation of the carbon source proceeds sufficiently). Since the mixture herein used can be repeatedly used for the reaction with the intermediate medium recovered at a reuse step to be described later, an unreacted portion of the intermediate medium is not immediately lost.

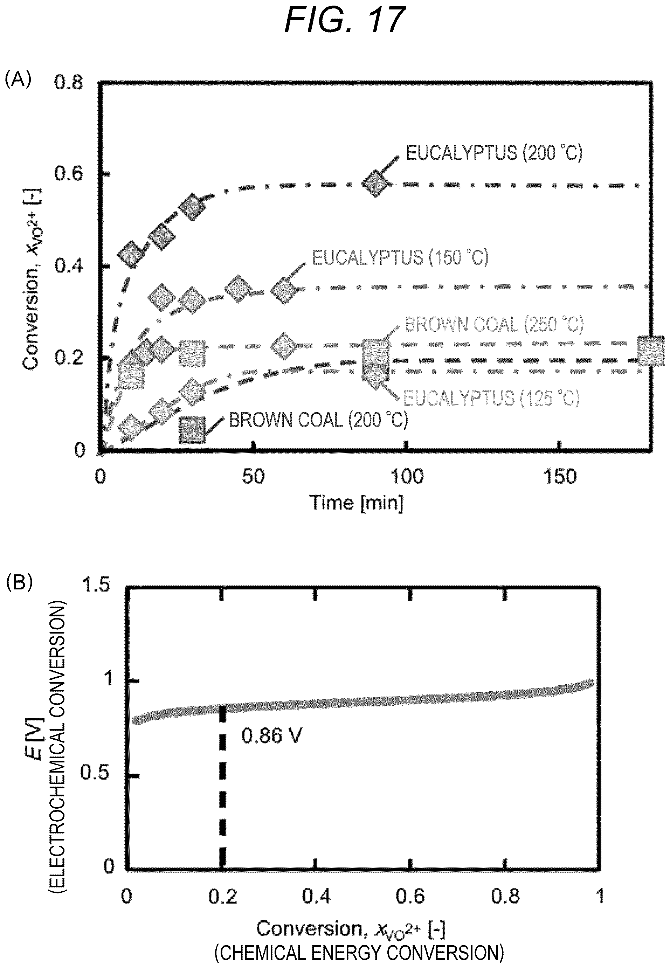

Even in a state in which the reaction rate of the intermediate medium is low and the reduction reaction is not completely terminated, the reaction in the subsequent electrochemical conversion unit sufficiently proceeds. Fig. 17(b) illustrates this, which will be described later.

Preferred embodiments of the chemical conversion unit will be described later in detail.

(Electrochemical Conversion Step)

The method for generating power or producing hydrogen of the present invention includes the electrochemical conversion step of bringing the solution containing the intermediate medium reduced at the chemical conversion step into contact with the anode of the battery structure in the electrochemical conversion unit including the battery structure, or using the base material in contact with the intermediate medium reduced at the chemical conversion step as the anode of the battery structure, and bringing oxygen or air into contact with the cathode of the battery structure to generate power, or bringing water into contact to produce hydrogen.

<Power Generation Method (Electrochemical Conversion Unit)>

The electrochemical conversion unit includes, as the battery structure, one electrode (anode), the other electrode (cathode), and an energization unit that connects the one electrode and the other electrode. The one electrode and the other electrode are not particularly limited. In the present invention, the electrochemical conversion unit is preferably of a redox flow type in which each of the one electrode and the other electrode includes a pump. As materials of the one electrode and the other electrode, known electrodes can be adopted. As the electrode, for example, in addition to Pt, carbon can be used because of its small overvoltage, but the electrode is not limited thereto. In particular, as the anode, a base material obtained by precipitating the intermediate medium on the base material at the chemical conversion step may be used.

As the battery structure, a known water electrolysis separator can also be used.

At the electrochemical conversion step included in the power generation method, the solution containing the intermediate medium reduced at the chemical conversion step is brought into contact with the anode of the battery structure in the electrochemical conversion unit including the battery structure, or the base material on which the intermediate medium reduced at the chemical conversion step is precipitated is used as the anode of the battery structure.

Examples of the method for bringing the reduced intermediate medium into contact with the anode include, for example, a method for bringing the solution containing the intermediate medium in the reduced state obtained at the chemical conversion step into contact with the anode using the solution as an electrolytic solution.

Examples of the method for using the base material on which the intermediate medium reduced at the chemical conversion step is precipitated as the anode of the battery structure include a mode in which in a case where the intermediate medium is precipitated as a solid phase at the chemical conversion step, the intermediate medium in the reduced state is precipitated on the base material at the chemical conversion step, and the base material on which the intermediate medium is precipitated at the electrochemical conversion step is used as the anode of the battery structure in the electrochemical conversion unit and the like.

A form of the base material is not particularly limited, and a base material in any form such as a plate shape, a rod shape, or a mesh shape can be used.

The material of the base material is not particularly limited, and a known electrode and the like can be used as the electrode, but in a case where the intermediate medium is precipitated as metal, the base material can be made of the same metal as the intermediate medium.

Note that, in a case where the material of the base material and the intermediate medium in the reduced state are the same metal, the base material and the precipitated intermediate medium in the reduced state are inseparable, and the base material and the intermediate medium might be integrated to serve as an anode and the intermediate medium in the reduced state.

In a case where a method for bringing the solution containing the intermediate medium in the reduced state obtained at the chemical conversion step into contact with the anode using the solution as the electrolytic solution is adopted, the battery structure in the electrochemical conversion unit may be configured as a redox flow type battery.

As the electrolytic solution, a solution in which the intermediate medium subjected to a reduction treatment at the chemical conversion step is dissolved or a solution after the intermediate medium is precipitated at the chemical conversion step can be used as it is.

Here, by supplying an oxygen gas or air to the other electrode (cathode), this works as a battery.

At the electrochemical conversion step (in a case where power generation is performed), reaction of the oxidation of the intermediate medium does not need to be completely finished. Even if an unreacted part remains, the solution (electrolytic solution) and an electrode member are repeatedly used with the chemically reacted part, so that it does not lead to a loss.

<Method for Producing Hydrogen (Electrochemical Conversion Unit)>

Hydrogen is generated by supplying water to a cathode side with a configuration substantially similar to that of the battery (power generation method).

Depending on the type and state of the intermediate medium, it might be necessary to apply an electrolytic current from outside. Even in this case, the voltage required for the water electrolysis is much lower than that in normal water electrolysis, an energy conversion efficiency becomes high, and an effect of bringing the intermediate medium into contact with the anode is recognized.

In a case where the current from outside is applied, a carbon electrode can also be used because the electrolytic voltage decreases. At the electrochemical conversion step (in a case where hydrogen is produced), reaction of the oxidation of the intermediate medium does not need to be completely finished. Even if an unreacted part remains, the solution (electrolytic solution) and an electrode member are repeatedly used with the chemically reacted part, so that it does not lead to a loss. What is important is that the carbon source is consumed in the chemical conversion unit.

<Reuse Step>

The method for generating power or producing hydrogen of the present invention includes a reuse step of returning a solution containing the intermediate medium after the electrochemical conversion step to the mixture.

By including the reuse step, the intermediate medium can be repeatedly used at the chemical conversion step and the electrochemical conversion step, it is not necessary to completely progress the reduction reaction and the oxidation reaction of the intermediate medium, a tolerance to the change in reaction conditions is widened, and the carbon source can be efficiently consumed.

Since the intermediate medium is not consumed in principle, there also is an effect from the viewpoint of resource saving.

<Cooperation between Steps>

For example, at the chemical conversion step of the present invention, the carbon source is added to the solution containing the intermediate medium (oxidized state), and this is held in a pressurized state at a predetermined temperature (temperature range in which the chemical exergy of the carbon source exceeds the chemical exergy of the intermediate medium in the reduced state), thereby reducing the intermediate medium. Thereafter, the reduced intermediate medium or the solution containing the same is cooled and supplied to the anode of the battery to extract electric energy or produce hydrogen at the electrochemical conversion step of the present invention. At the electrochemical conversion step, since an intermediate raw material is oxidized, after this is taken out, the carbon source is added again and this is returned to the chemical conversion step (reuse step).

In a case where the cooling is performed by a heat pump, the extracted heat can be used for heating the chemical conversion unit and maintaining the temperature.

In a case where the reaction in the chemical conversion unit is performed in the solution and the intermediate medium in the oxidized state in the electrochemical conversion unit is contained in the solution, the chemical conversion step, the electrochemical conversion step, and the reuse step can be continuously performed in parallel by connecting the chemical conversion unit and the electrochemical conversion unit with a pipeline.

The chemical conversion unit and the electrochemical conversion unit can be freely combined, and a plurality of both of them can be appropriately combined.

In the electrochemical conversion unit, power generation and hydrogen production can be performed simultaneously in parallel by installing a plurality of cells. At that time, the electricity herein generated may be used as auxiliary energy for hydrogen production.

In the present invention, it is preferable that a recovery step of recovering a $CO_2$ gas is provided at a subsequent stage of the chemical conversion step, and a step of separating a nitrogen gas from the gas obtained at the chemical conversion step is not included. In the present invention, since the combustion reaction is not performed at the chemical conversion step, the reaction proceeds without introducing a nitrogen-containing gas such as air into the chemical conversion step. In a case where a nitrogen-containing gas such as air is not introduced into the chemical conversion step, since the gas obtained at the chemical conversion step originally contains almost no nitrogen gas, a step of separating the nitrogen gas is not required.

Other preferred embodiments of the energy conversion method of the present invention are similar to the preferred embodiments of the energy conversion system of the present invention to be described later.

[Energy Conversion System]

An energy conversion system of the present invention includes a chemical conversion unit that reduces an intermediate medium from an oxidized state to a reduced state while oxidizing a carbon source, and

an electrochemical conversion unit that includes one electrode, the other electrode, and an energization unit that connects the one electrode and the other electrode, and reduces a material to be reduced at the other electrode while oxidizing the intermediate medium from a reduced state to an oxidized state at the one electrode,

in which at a reaction temperature of the chemical conversion unit, a reduction reaction is performed at a temperature at which chemical exergy of the carbon source exceeds chemical exergy in the reduced state of the intermediate medium, and

the electrochemical conversion unit outputs at least one of a reductant of the material to be reduced and electric power to outside.

With this configuration, the system of the present invention is excellent in energy conversion efficiency in the power generation or production of secondary energy having a high exergy rate.

Here, the chemical exergy means the maximum work that can be performed until a target substance is chemically balanced with atmosphere in a standard state.

(Material to be Reduced, Reductant of Material to be Reduced)

The reductant of the material to be reduced obtained in the electrochemical conversion unit is not particularly limited, but is preferably a high-grade energy resource. The high-grade energy resource is more preferably hydrogen, and in addition to this, examples thereof include hydrocarbon, alcohol, aldehyde, carboxylic acid, CO and the like.

Similarly, the material to be reduced to be introduced into the electrochemical conversion unit is not particularly limited. In a case where hydrogen is produced as the reductant of the material to be reduced, the material to be reduced is preferably $H_2O$ from the viewpoint of obtaining hydrogen with high purity.

Hereinafter, preferred embodiments of the present invention will be described.

<Outline of Energy Conversion System of Present Invention>

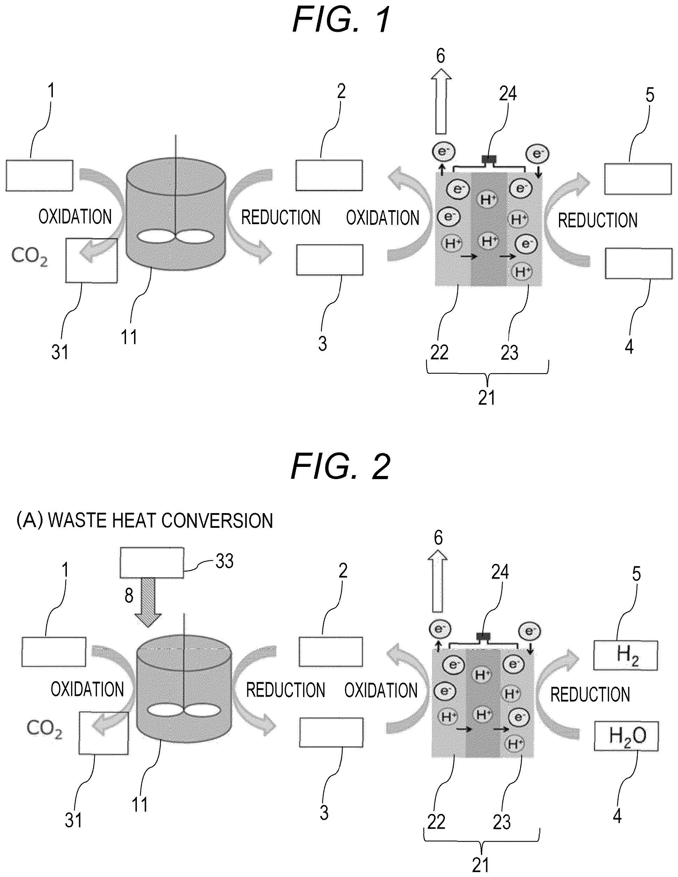

First, an outline of an energy conversion system of the present invention will be described with reference to the drawings. Fig. 1 is a schematic diagram of an example of the energy conversion system of the present invention.

The system illustrated in Fig. 1 includes a chemical conversion unit 11 that reduces an intermediate medium from an oxidized state to a reduced state at a reaction temperature lower than a temperature generated in a combustion reaction of a carbon source 1.

The chemical conversion unit 11 preferably includes a reactor that causes the intermediate medium in the oxidized state to react with the carbon source. The reactor is capable of implementing a temperature and a pressure embodied at a chemical conversion step. Regarding the temperature, it is preferable that a reaction container can be controlled to a predetermined temperature by waste heat and the like.

In the present invention, the chemical conversion unit 11 preferably causes a solid carbon source to react in a solution containing the intermediate medium in the oxidized state from the viewpoint of contact between the intermediate medium and the carbon source. In this case, it is preferable that the reactor implements an extruded flow in both a liquid phase and a solid phase.

The energy conversion system illustrated in Fig. 1 includes a recovery unit 31 that recovers a $CO_2$ gas at a subsequent stage of the chemical conversion unit 11, but the recovery unit 31 is not necessarily included. Note that, in Fig. 1, the chemical conversion unit 11 includes a propeller (stirring member), but the propeller is not necessarily included.

The energy conversion system illustrated in Fig. 1 includes one electrode 22, the other electrode 23, and an energization unit 24 that connects the one electrode 22 and the other electrode 23, and includes an electrochemical conversion unit 21 that reduces a material to be reduced 4 by the other electrode 23 while oxidizing the intermediate medium from the reduced state to the oxidized state by the one electrode 22.

In the energy conversion system illustrated in Fig. 1, the electrochemical conversion unit 21 outputs at least one of a reductant 5 of the material to be reduced or electric power 6 to the outside.

In the energy conversion system illustrated in Fig. 1, an intermediate medium in the oxidized state 2 is reduced and converted into an intermediate medium in the reduced state 3 in the chemical conversion unit 11, and the intermediate medium in the reduced state 3 is oxidized and converted into the intermediate medium in the oxidized state 2 in the electrochemical conversion unit 21. In the present invention, the oxidation reduction is preferably repeated by returning the intermediate medium in the oxidized state 2 obtained in the electrochemical conversion unit 21 to the chemical conversion unit 11.

The electrochemical conversion unit 21 oxidizes the intermediate medium from the reduced state to the oxidized state in the one electrode. The electrochemical conversion unit 21 preferably includes a pipe for supplying the intermediate medium in the reduced state to the one electrode. The electrochemical conversion unit 21 preferably includes a return pipe for returning the obtained intermediate medium in the oxidized state to the chemical conversion unit 11. The intermediate medium in the oxidized state is reused in the chemical conversion unit 11.

The electrochemical conversion unit preferably includes a structure capable of outputting at least one of the reductant of the material to be reduced or the electric power to the outside. The energization unit may also serve as the structure for outputting electric power to the outside, or another member may also be used.

The energy conversion system of the present invention preferably includes at least one of a plurality of chemical conversion units 11 or a plurality of electrochemical conversion units 21.

In a case where a plurality of chemical conversion units 11 is provided, configurations thereof, reaction raw materials and reaction conditions implemented therein may be the same or different from each other;

in a case where a plurality of electrochemical conversion units 21 is provided, configurations thereof, reaction raw materials and reaction conditions implemented therein may be the same or different from each other;

herein, it is also preferable that a plurality of electrochemical conversion units 21 is provided, and auxiliary power for hydrogen generation is generated and supplied by at least one of the electrochemical conversion units.

The chemical conversion unit in the energy conversion system of the present invention can be classified into four modes of the following chemical conversion units a to d.

Chemical conversion unit a: an oxidation reduction reaction is an exothermic reaction, and the intermediate medium after reduction is dissolved in a reaction liquid.

Chemical conversion unit b: the oxidation reduction reaction is the exothermic reaction, and the intermediate medium after reduction is a solid.

Chemical conversion unit c: the oxidation reduction reaction is an endothermic reaction, and the intermediate medium after reduction is dissolved in the reaction liquid.

Chemical conversion unit d: the oxidation reduction reaction is an endothermic reaction, and the intermediate medium after reduction is a solid.

The electrochemical conversion unit in the energy conversion system of the present invention can be classified into six modes of the following electrochemical conversion units a to f.

Electrochemical conversion unit a: an anode is brought into contact with a solution containing the intermediate medium after reduction, and a cathode is brought into contact with oxygen or air (power generation).

Electrochemical conversion unit b: a base material on which the intermediate medium is precipitated is used as the anode, and the cathode is brought into contact with oxygen or air (power generation).

Electrochemical conversion unit c: the anode is brought into contact with the solution containing the intermediate medium after reduction, the cathode is brought into contact with water, and additional power supply at the time of hydrogen production is not performed (hydrogen production).

Electrochemical conversion unit d: the base material on which the intermediate medium is precipitated is used as the anode, the cathode is brought into contact with water, and additional power supply at the time of hydrogen production is not performed (hydrogen production).

Electrochemical conversion unit e: the anode is brought into contact with the solution containing the intermediate medium after reduction, the cathode is brought into contact with water, and additional power supply at the time of hydrogen production is performed (hydrogen production).

Electrochemical conversion unit f: the base material on which the intermediate medium is precipitated is used as the anode, the cathode is brought into contact with water, and additional power supply at the time of hydrogen production is performed (hydrogen production).

Note that,

Examples of combinations of the chemical conversion unit and the electrochemical conversion unit in the energy conversion system in the present invention include following systems 1 to 12.

System 1: the chemical conversion unit a and electrochemical conversion unit a.

System 2: the chemical conversion unit a and electrochemical conversion unit c.

System 3: the chemical conversion unit a and electrochemical conversion unit e.

System 4: the chemical conversion unit b and electrochemical conversion unit b.

System 5: the chemical conversion unit b and electrochemical conversion unit d.

System 6: the chemical conversion unit b and electrochemical conversion unit f.

System 7: the chemical conversion unit c and electrochemical conversion unit a.

System 8: the chemical conversion unit c and electrochemical conversion unit c.

System 9: the chemical conversion unit c and electrochemical conversion unit e.

System 10: the chemical conversion unit d and electrochemical conversion unit b.

System 11: the chemical conversion unit d and electrochemical conversion unit d.

System 12: the chemical conversion unit d and electrochemical conversion unit f.

Furthermore, the energy conversion system of the present invention may be a combined system including a plurality of different systems out of the systems 1 to 12.

<First Preferred Embodiment>

A first preferred embodiment of the energy conversion system of the present invention is hereinafter described.

The first preferred embodiment is a specific example in a case where there is no additional power supply means at the time of hydrogen production, and is a specific example of the system 1, 2, 4, 5, 7, 8, 10, or 11.

In particular, the first preferred embodiment of the energy conversion system is preferably a mode of highly efficient waste heat utilization utilizing temperature dependency of chemical exergy.

The waste heat utilization includes both an embodiment in which the waste heat is utilized for the endothermic reaction in the chemical conversion unit (the systems 7, 8, 10, and 11), and an embodiment in which the waste heat is utilized for maintaining and adjusting an environmental temperature (the systems 1, 2, 4, and 5).

Fig. 2 is a schematic diagram of an example of the first preferred embodiment of the energy conversion system of the present invention.

In the energy conversion system illustrated in Fig. 2, in the energy conversion system illustrated in Fig. 1, the chemical conversion unit 11 further includes a waste heat supply means 33, and waste heat 8 is supplied from the waste heat supply means 33. The waste heat 8 is not particularly limited as long as this is heat discarded from a power plant, a factory, a waste disposal site and the like. Examples of waste heat can include heat discarded from thermal engines of the power plant, factory, waste disposal site and the like. A temperature of the waste heat is preferably equal to or higher than the reaction temperature of the chemical conversion unit. Note that, the chemical conversion unit only needs to include a heat supply means, and this does not need to be the waste heat supply means. The heat supply means in the chemical conversion unit may be, for example, a solar heat supply means that supplies solar heat.

In the example of Fig. 2, $H_2$, which is the reductant 5 of the material to be reduced, and the electric power 6 are simultaneously produced (co-produced) using $H_2O$ (or $H^+$) as the material to be reduced 4, and in this example, it is also preferable that hydrogen can be produced without generating $O_2$ In the embodiment illustrated in Fig. 2, the chemical conversion unit may be any of the chemical conversion units a to d. The electrochemical conversion unit may be either the electrochemical conversion unit c or d. That is, the embodiment illustrated in Fig. 2 is an embodiment corresponding to the above-described system 2, 5, 8, or 11.

In the first preferred embodiment of the energy conversion system, the chemical exergy of the intermediate medium in the electrochemical conversion unit is larger than the chemical exergy of the carbon source in the chemical conversion unit. Note that, at that time, the chemical exergy in the electrochemical conversion unit and the chemical exergy in the chemical conversion unit are compared with each other in terms of chemical exergy under each temperature condition. That is, it is not limited to a case where the comparison is performed with the chemical exergy under the same temperature condition, and the comparison can be performed with the chemical exergy under different temperature conditions. In the first preferred embodiment of the energy conversion system, the chemical exergy of the intermediate medium in the electrochemical conversion unit is preferably larger than the chemical exergy of the intermediate medium in the chemical conversion unit.

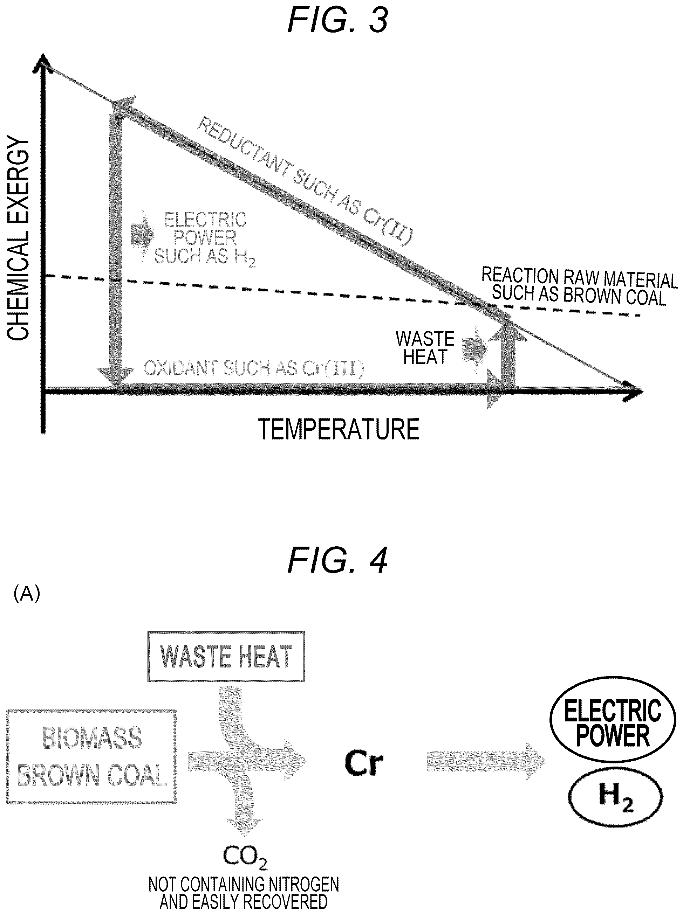

Fig. 3 is a schematic graph of a relationship between the temperature and the chemical exergy of the intermediate medium used in the first preferred embodiment of the energy conversion system. As can be seen from Fig. 3, when the chemical exergy of the intermediate medium (in the reduced state) is made smaller than the chemical exergy of the carbon source (illustrated as a reaction raw material in Fig. 3) at the reaction temperature of the chemical conversion unit, and the chemical exergy of the intermediate medium (in the reduced state) in the electrochemical conversion unit is made larger than the chemical exergy of the intermediate medium (in the reduced state) in the chemical conversion unit, in a case where the reduction reaction of the intermediate medium is the endothermic reaction, the reaction in the chemical conversion unit proceeds by introducing waste heat and the like as additional energy into the chemical conversion unit. In this case, it can be seen that the reaction in the electrochemical conversion unit also easily proceeds, and a secondary energy source having a high exergy rate such as electric power or hydrogen can be produced with high efficiency.

In the first preferred embodiment of the energy conversion system, the reaction in the chemical conversion unit is preferably the endothermic reaction. That is, the chemical conversion unit c or d is preferable, and the system 7, 8, 10 or 11 is preferable.

In the first preferred embodiment of the energy conversion system, there is a case where a heat exchange unit is provided between the chemical conversion unit and the electrochemical conversion unit, and the reaction temperature in the electrochemical conversion unit is made lower than the reaction temperature in the chemical conversion unit, so that more energy can be utilized.

Furthermore, in the first preferred embodiment of the system, it is preferable to include a heat return pipe capable of returning the heat recovered by the heat exchange unit to the waste heat supply means (or a second heat exchange unit optionally provided at a preceding stage of the chemical reaction unit) from the viewpoint of enhancing the energy conversion efficiency.

Fig. 4 is a schematic diagram of a mode of recovering the $CO_2$ gas in the first preferred embodiment of the system. As illustrated in Fig. 4, in a case of a mode of introducing waste heat into the chemical conversion unit, oxidizing biomass or brown coal used as the carbon source, and reducing the intermediate medium in the oxidized state, and including a recovery unit that recovers the $CO_2$ gas at a subsequent stage of the chemical conversion unit, the gas ($CO_2$-containing gas) obtained in the chemical conversion unit does not contain nitrogen, and nitrogen separation is unnecessary, so that recovery of a high-purity $CO_2$ gas is easy.

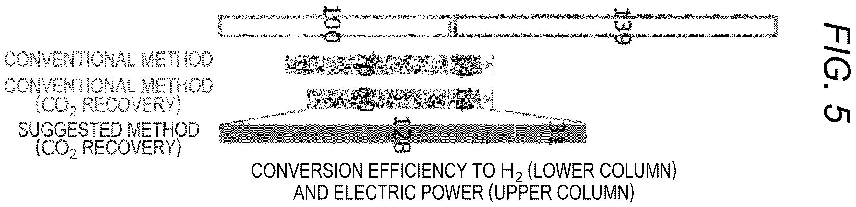

A mode (proposed method) of recovering the $CO_2$ gas in the first preferred embodiment of the system in a case of producing electric power or hydrogen using $Cr^{(III)}$ as the intermediate medium in the oxidized state has a very high energy conversion efficiency compared with that in the conventional method. Fig. 5 is a schematic diagram comparing the energy conversion efficiency between a conventional method and the proposed method using the first preferred embodiment of the system of the present invention.

As the conventional method, the conversion efficiency in a case where energy of biomass or brown coal (this energy is set to 100) is converted into $H_2$ by gasification is about 70%, and the conversion efficiency in a case where $CO_2$ is recovered by the conventional method is about 60% when nitrogen separation is also taken into consideration. The efficiency in a case of generating power by a thermoelectric conversion element from waste heat (139) of about 300°C is about 10% (about 14).

In contrast, in the proposed method, the endothermic reaction of converting energy of biomass or brown coal (100) into $Cr^{(II)}$ in the chemical conversion unit by inputting waste heat (139) at about 300°C is performed to recover the $CO_2$ gas, and electric power (31) and $H_2$ (128) can be produced together when $Cr^{(II)}$ is reoxidized by water in the electrochemical conversion unit. The energy conversion efficiency is 100% $\times$ (128 + 31)/(100 + 139) = about 67%.

Therefore, in the proposed method (128 + 31 = 159), the energy conversion efficiency is about twice as compared with the conventional method (60 + 14 = 74) in a case where the $CO_2$ gas is recovered.

Therefore, the energy conversion system of the present invention is also a so-called CCUS ready method capable of easily combining recovery steps of recovering the $CO_2$ gas (common to the first and second preferred embodiments). In the present specification, to prepare to be able to additionally install CCUS equipment at an appropriate time in the future is referred to as "CCUS Ready". CCUS means a carbon dioxide capture, utilization and storage technology. Note that, in the recovery of the $CO_2$ gas, it is required to separate a nitrogen gas from the $CO_2$-containing gas to obtain the high-purity $CO_2$ gas on the basis of laws and regulations and guidelines in Japan in a scene of marine disposal of $CO_2$ gas and the like, and there is a problem that energy and cost required for a step of separating the nitrogen gas are large.

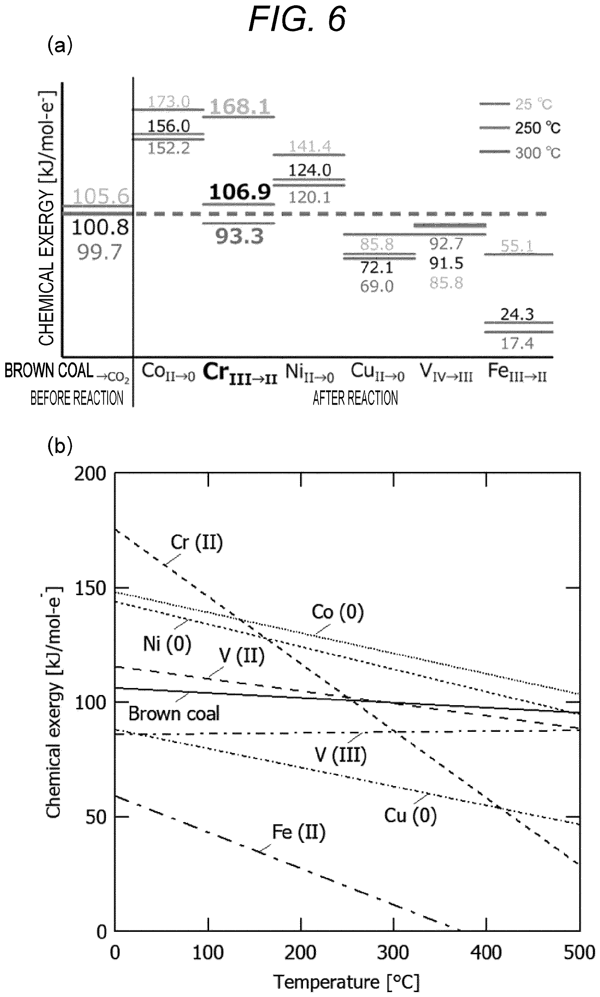

Fig. 6(a) illustrates values of the chemical exergy of the carbon source (brown coal) and the intermediate medium at representative temperatures. As can be seen from Fig. 6(a), in a case where a Cr compound having an oxidation number of 3 is changed to a Cr compound having an oxidation number of 2, when the reaction temperature of the chemical conversion unit is set to 300°C (255°C or higher in calculation), the chemical exergy of the intermediate medium (in the reduced state) can be made smaller than the chemical exergy of the carbon source. Similarly, for example, also in a case where the Cr compound having an oxidation number of 3 is changed to a Cr compound having an oxidation number of 1 or 0, in a case where a Ni compound having an oxidation number of 2 is changed to a Ni compound having an oxidation number of 0, and in a case where a vanadium compound having an oxidation number of 3 is changed to a vanadium compound having an oxidation number of 2, the chemical exergy of the intermediate medium can be made smaller than the chemical exergy of the carbon source by setting the reaction temperature to a high temperature. For example, the reaction temperature in a case where the Cr compound having an oxidation number of 3 is changed to the Cr compound having an oxidation number of 1 or 0 is 300°C or higher, the reaction temperature in a case where the Ni compound having an oxidation number of 2 is changed to the Ni compound having an oxidation number of 0 is 310°C or higher, and the reaction temperature in a case where the vanadium compound having an oxidation number of 3 is changed to the vanadium compound having an oxidation number of 2 is 290°C or higher. Fig. 6(b) is a graph illustrating a change in temperature of the chemical exergy of brown coal and the intermediate medium after reduction, illustrating a valence after reduction except for brown coal.

Fig. 6(b) illustrates that when the reaction temperature of the electrochemical conversion unit is set to 25°C (room temperature), the chemical exergy of the intermediate medium in the reduced state in the electrochemical conversion unit can be made larger than the chemical exergy of the intermediate medium in the reduced state in the chemical conversion unit (at 300°C).

In the first preferred embodiment of the energy conversion system, the reaction (reduction reaction of the intermediate medium) in the chemical conversion unit is preferably the endothermic reaction (for example, $Cr^{3+} \rightarrow Cr^{2+}$). In a mode in which the reaction in the chemical conversion unit is the endothermic reaction, in a case of $Cr^{3+} \rightarrow Cr^{2+}$, the reaction temperature in the chemical conversion unit is more preferably 255°C or higher and 350°C or lower from the viewpoint of a pressure in a case of performing the reaction in the chemical conversion unit with waste heat utilization and an aqueous solution, and particularly preferably 280°C or higher and 320°C or lower.

In addition, the reaction temperature of the chemical conversion unit may be a condition under which the chemical exergy of the intermediate medium in the reduced state is smaller than the chemical exergy of the carbon source.

In the first preferred embodiment of the energy conversion system, the intermediate medium preferably contains a Cr element. The intermediate medium in the oxidized state is more preferably $Cr^{(III)}$ having an oxidation number of 3, and the intermediate medium in the reduced state is more preferably $Cr^{(II)}$ having an oxidation number of 2, $Cr^{(I)}$ having an oxidation number of 1, or $Cr^{(0)}$ having an oxidation number of 0, and still more preferably $Cr^{(I)}$ having an oxidation number of 1 or $Cr^{(0)}$ having an oxidation number of 0. Generally, it is preferable to increase a reduction degree in terms of increasing exergy, but an appropriate reduction degree can be selected in consideration of a relationship with processing conditions of both the chemical conversion unit and the electrochemical conversion unit.

<Second Preferred Embodiment>

A second preferred embodiment of an energy conversion system is a mode in which an electrochemical conversion unit includes an additional power supply means, additional power is supplied from the additional power supply means, and an electrochemical conversion unit takes out a reductant of a material to be reduced to the outside. In the following description, (B-2) is the present mode. The second preferred embodiment is a specific example in a case where there is an additional power supply means at the time of hydrogen production, that is, a specific example of an electrochemical conversion unit e or f, and is a specific example of the system 3, 6, 9, or 12.

In the second preferred embodiment of the energy conversion system, it is preferable that both (B-1) power generation during insufficient power and (B-2) hydrogen production during power excess can be performed. That is, a mode is preferable that the electrochemical conversion unit outputs electric power to the outside in a case where a power supply is insufficient with respect to a power demand, and the electrochemical conversion unit outputs the reductant of the material to be reduced to the outside in a case where the power supply is excessive with respect to the power demand.

Specifically, in the second preferred embodiment of the energy conversion system, it is more preferable that the electrochemical conversion unit includes a control unit, and the control unit controls in such a manner that the electrochemical conversion unit outputs the electric power to the outside in a case where the power supply is insufficient with respect to the power demand, and the electrochemical conversion unit outputs the reductant of the material to be reduced to the outside in a case where the power supply is excessive with respect to the power demand.

Here, the electrochemical conversion unit (hereinafter, also referred to as an "electrochemical conversion unit A") that outputs the electric power to the outside and the electrochemical conversion unit (hereinafter, also referred to as an "electrochemical conversion unit B") that outputs the reductant of the material to be reduced to the outside may be the same or different.

In a case where the electrochemical conversion unit A and the electrochemical conversion unit B are different from each other, they may be included in the same system or may be included in different systems.

That is, the system of the present invention also includes a complex of systems including two or more systems including the electrochemical conversion unit.

In a case where the electrochemical conversion unit A and the electrochemical conversion unit B are the same electrochemical conversion unit, there are advantages such as downsizing of the system and reduction in manufacturing cost.

In a case where the electrochemical conversion unit A and the electrochemical conversion unit B are different electrochemical conversion units, an electrode structure, a catalyst and the like suitable for outputting the electric power to the outside can be selected in the electrochemical conversion unit A, and an electrode structure, a catalyst and the like suitable for outputting the reductant to the outside can be selected in the electrochemical conversion unit B, so that there is an advantage that a degree of freedom in design is high.

The number of the electrochemical conversion units A and the number of the electrochemical conversion units B are not particularly limited.

For example, the energy conversion system of the present invention can take various forms such as a system including a plurality of electrochemical conversion units B for one electrochemical conversion unit A, and a system that is a complex of a system including one electrochemical conversion unit A and a plurality of systems including one electrochemical conversion unit B.

((B-1) Power Generation during Power Shortage)

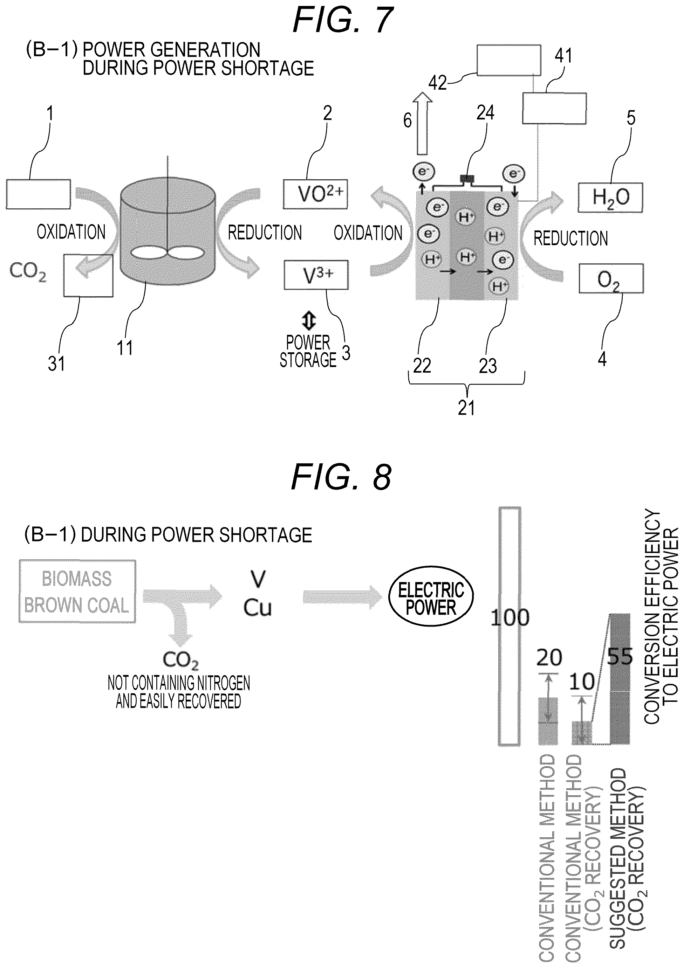

Fig. 7 is a schematic diagram of an example of a case where (B-1) power generation during power shortage is performed in the second preferred embodiment of the system of the present invention. (B-1) is a specific example of the electrochemical conversion unit a or b, and is a specific example of the system 1, 4, 7, or 10.

In the system illustrated in Fig. 7, in the system illustrated in Fig. 1, an electrochemical conversion unit 21 further includes a control unit 41, and the control unit 41 controls in such a manner that the electrochemical conversion unit 21 outputs the electric power 6 to the outside in a case where the power supply is insufficient for the power demand. Note that, although the system illustrated in Fig. 7 further includes an additional power supply means 42, the additional power supply means 42 is not required to be used in (B-1) power generation during power shortage.

In the example of Fig. 7, in the chemical conversion unit, $VO^{2+}$ is used as an intermediate medium in the oxidized state 2, and a carbon source 1 is oxidized while $V^{3+}$, which is an intermediate medium in the reduced state 3, is obtained. Note that, in the example of Fig. 7, a reaction temperature of the chemical conversion unit can be set to 250°C or lower.

In the example of Fig. 7, in the electrochemical conversion unit, while $H_2O$, which is a reductant 5 of a material to be reduced, is obtained using $O_2$ as a material to be reduced 4, $VO^{2+}$, which is the intermediate medium in the oxidized state 2 is regenerated from $V^{3+}$, which is the intermediate medium in the reduced state 3, and the electric power 6 is output.

Fig. 8 is a schematic diagram of a proposed method for recovering a $CO_2$ gas in a case where (B-1) power generation during power shortage is performed, and a bar graph in comparison with the conventional method. As illustrated in Fig. 8, in a case of a mode of oxidizing biomass or brown coal used as the carbon source in the chemical conversion unit, and reducing the intermediate medium in the oxidized state, and including a recovery unit that recovers the $CO_2$ gas at a subsequent stage of the chemical conversion unit, the gas ($CO_2$-containing gas) obtained in the chemical conversion unit does not contain nitrogen, and nitrogen separation is unnecessary, so that recovery of a high-purity $CO_2$ gas is easy.

An example of the reaction in the chemical conversion unit of Fig. 7 is as follows.

$$CH_{0.84}O_{0.34} + 1.66H_2O \rightarrow CO_2 + 4.16H^+ + 4.16e^-$$

$$VO^{2+} + 2H^+ + e^- \rightarrow V^{3+} + H_2O$$

$$CH_{0.84}O_{0.34} + 4.16VO^{2+} + 4.16H^+ \rightarrow CO_2 + 2.5H_2O + 4.16V^{3+}$$

An example of the reaction in the electrochemical conversion unit of Fig. 7 is as follows.

$$V^{3+} + H_2O \rightarrow VO^{2+} + 2H^+ + e^- \ 0.337 \ V$$

$$O_2 + 4H^+ + 4e^- \rightarrow 2H_2O \ 1.23 \ V$$

$$4V^{3+} + 2H_2O + O_2 \rightarrow 4VO^{2+} + 4H^+ \ E_0 = 0.89 \ V$$

Therefore, a theoretical power amount of the energy conversion system illustrated in Fig. 7 is

$$4.16 \ [\text{mol-e}^-/\text{mol-C}] \times 0.89 \ [\text{V}] \times [96500 \ \text{C/mol-C}]$$

$$= 357.3 \ \text{kJ/mol-C}.$$

Since a calorific value of brown coal is 451.2 kJ/mol-C, the theoretical power generation efficiency of the energy conversion system illustrated in Fig. 7 is 0.79 (= 357.3/451.2).

In this case, practical power generation efficiency is $0.79 \times 0.7 = 0.55$ using a coefficient 0.7 in consideration of efficiency of electrochemical conversion and other energy loss.

In a case where (B-1) power generation during power shortage is performed, it is possible to simultaneously solve mutually contradictory problems such as reduction in grade of fossil fuel due to resource depletion of carbon source, separation and recovery of $CO_2$ (CCUS), utilization of biomass and the like, coping with load variation (including balance between power demand and power supply), and improvement in power generation efficiency.

Results of comparing the case (B-1) (proposed method) with the conventional method (boiler) and IGCC (coal gasification combined power generation plant) are illustrated in following Table 2.

[Table 2]

| Feedstock | System | Operation temperature [°C] | Power generation efficiency [%] without $CO_2$ recovery | Power generation efficiency [%] with $CO_2$ recovery |
|---|---|---|---|---|
| Brown coal or biomass | Conventional method (boiler) | 800-900 | 10 to 30 | |
| | IGCC | > 1000 | 36 to 42[2] | 30 to 32[2] |
| | Suggested method | < 250 | (55) | To 55 |

[2] Cost and Performance Baseline for Fossil Energy Plants, Volume 1b, Rev 2b, DOE/NETL-2010/1397

From Table 2, in the power generation method with combustion (IGCC), when CCUS is introduced, the power generation efficiency decreases by about 10%, and most of the energy required for introduction is separation and recovery process. This is similar in the conventional method (boiler).

In contrast, in the proposed method (the second preferred embodiment of the energy conversion system (in a case where (B-1) power generation during power shortage is performed), since a synthesis gas in the chemical conversion unit is CCUS ready, a decrease in power generation efficiency in a case of introducing CCUS can be suppressed. Therefore, in the second preferred embodiment of the energy conversion system, it is preferable to include a recovery unit that recovers the $CO_2$ gas at a subsequent stage of the chemical conversion unit, and in a case where $CO_2$ is separated and recovered, particularly higher power generation efficiency can be obtained as compared with the conventional method or the like.

The results of the above description are summarized in a bar graph on a right side of Fig. 8. The conversion efficiency in a case where energy of biomass or brown coal (this energy is set to 100) is converted into electric power by the boiler as the conventional method is about 20% (10 to 30%) from Table 1, and the conversion efficiency in a case where $CO_2$ is recovered by the conventional method decreases by about 10% to be about 10%.

In contrast, in the proposed method, the energy of biomass or brown coal (100) can be converted into electric power with practical power generation efficiency of 0.55 (55%) as calculated above.

In the second preferred embodiment of the energy conversion system, it is also preferable that the reaction in the chemical conversion unit is an exothermic reaction from the viewpoint that the reaction can be continued by maintaining the temperature with its own reaction heat in a case where there is no heat that can be supplied from the outside. Note that, the reaction may be an endothermic reaction.

In the second preferred embodiment of the energy conversion system, the reaction temperature in the chemical conversion unit is preferably 25°C (room temperature) to 350°C from the viewpoint of the pressure in a case of performing the reaction in the chemical conversion unit with an aqueous solution, preferably 100°C or higher and 350°C or lower from the viewpoint of a reaction progress rate, and particularly preferably 220°C or higher and 250°C or lower from the viewpoint of using brown coal as the carbon source.

In the second preferred embodiment of the energy conversion system, it is preferable that the intermediate medium contains a Cu element or a V element, and it is more preferable that the intermediate medium contains a V element from the viewpoint of improving energy conversion efficiency at a high temperature in electrochemical conversion. The intermediate medium in the oxidized state is more preferably $Cu^{(II)}$ having an oxidation number of 2 or $V^{(IV)}$ having an oxidation number of 4, and the intermediate medium in the reduced state is more preferably $Cu^{(0)}$ having an oxidation number of 0, $V^{(III)}$ having an oxidation number of 3 or $V^{(II)}$ having an oxidation number of 2.

Note that, in the second preferred embodiment of the energy conversion system, the chemical exergy of the intermediate medium in the reduced state in the electrochemical conversion unit may be larger than the chemical exergy of the carbon source in the chemical conversion unit or may be the same or smaller.

((B-2) Hydrogen Production during Power Excess)

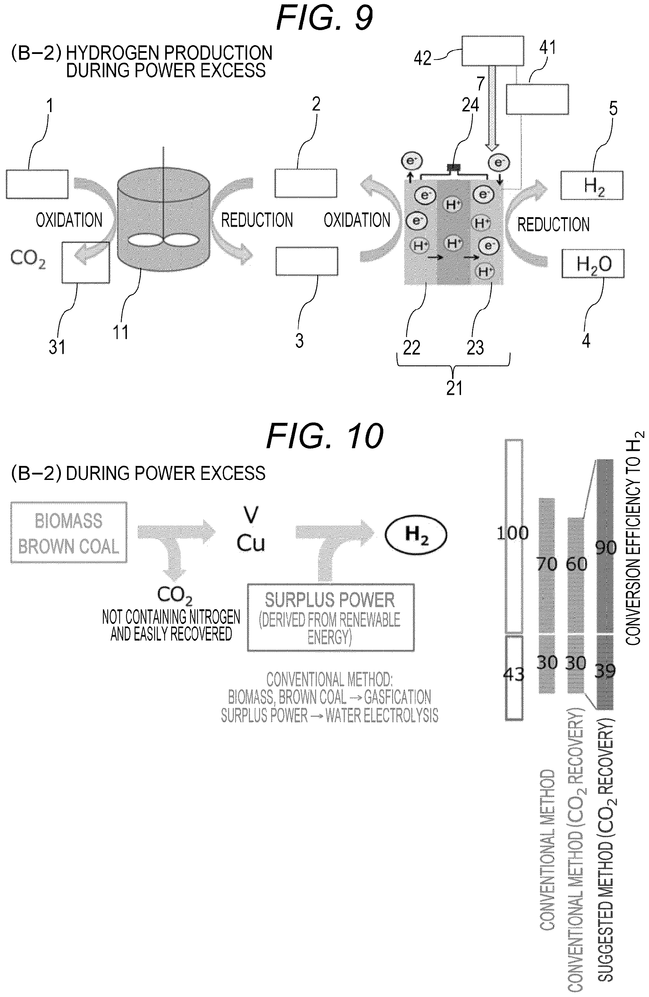

Fig. 9 is a schematic diagram of an example of a case where (B-2) hydrogen production during power excess is performed in the second preferred embodiment of the energy conversion system of the present invention.

In the energy conversion system illustrated in Fig. 9, in the energy conversion system illustrated in Fig. 7, the control unit 41 controls in such a manner that the electrochemical conversion unit 21 outputs the reductant 5 of the material to be reduced to the outside in a case where the power supply is excessive for the power demand. The energy conversion system illustrated in Fig. 9 further includes the additional power supply means 42, and additional power 7 is supplied from the additional power supply means 42 to the electrochemical conversion unit. It is preferable that the additional power supply is surplus power in a case where it is excessive with respect to the power demand, and it is particularly preferable that this is surplus power derived from renewable energy. In particular, as for sunlight among renewable energy, power is generated more than power demand in the daytime, so that surplus power derived from sunlight is preferably used as the additional power of the present invention. Electric power obtained by power generation according to the present invention may be supplied.

In the example of Fig. 9, $H_2$, which is the reductant 5 of the material to be reduced, is produced using $H_2O$ (or $H^+$) as the material to be reduced 4.

Fig. 10 is a schematic diagram of the proposed method for recovering the $CO_2$ gas in a case where (B-2) hydrogen production during power excess is performed in the second preferred embodiment of the energy conversion system, and a bar graph compared with the conventional method.

As the conventional method, the conversion efficiency in a case where energy of biomass or brown coal (this energy is set to 100) is converted into $H_2$ by gasification is about 70%, and the conversion efficiency in a case where $CO_2$ is recovered by the conventional method is about 60% when nitrogen separation is also taken into consideration. The efficiency in a case of producing hydrogen from surplus power (43) by water electrolysis is about 70% (about 30).

In contrast, in the proposed method, energy of biomass or brown coal (100) is converted into $V^{(III)}$ or $Cu^{(0)}$ by the chemical conversion unit, the $CO_2$ gas is recovered, and surplus power is introduced into the electrochemical conversion unit, so that $H_2$ can be produced by reduction of water. The energy conversion efficiency of the proposed method is about 90% from Evaluation Example 8 of Example 2 to be described later.

Therefore, in the proposed method (90 + 39 = 129), the energy conversion efficiency is about 1.4 times as compared with the conventional method (60 + 30 = 90) in a case where the $CO_2$ gas is recovered.

EXAMPLES

Hereinafter, the present invention will be described more specifically with reference to examples and comparative examples. Materials, amounts used, proportions, processing contents, processing procedures and the like described in the following examples can be appropriately changed without departing from the gist of the present invention. Therefore, the scope of the present invention should not be restrictively interpreted by the following specific examples.

[Example 1]

Implementation of an energy conversion system of Example 1 capable of performing high-efficiency waste heat conversion using temperature dependency of chemical exergy was examined.

A demonstration experiment of the energy conversion system illustrated in Fig. 2 was performed according to the following procedure, and it was demonstrated that electric power and $H_2$ can be produced together by waste heat supply.

A chemical conversion unit included a structure capable of supplying waste heat, and was able to perform an endothermic reaction at 250 to 300°C. As a carbon source, brown coal was used. In the chemical conversion unit, an aqueous solution of $Cr(OH)_3$ as a Cr compound having an oxidation number of 3 was used as an intermediate medium in an oxidized state. In the chemical conversion unit, brown coal was oxidized to obtain $CO_2$, and the intermediate medium in the oxidized state was reduced to an intermediate medium in a reduced state of CrO having an oxidation number of 2.

$CO_2$ generated in the chemical conversion unit was recovered by substantially 100% (99 volume% or more) by a recovery unit (including a separator and a recoverer) connected between the chemical conversion unit and an electrochemical conversion unit.

The intermediate medium in the reduced state generated in the chemical conversion unit was transferred to the electrochemical conversion unit.

The electrochemical conversion unit included a structure including one electrode, the other electrode, and an energization unit connecting them, and was of a redox flow type. The intermediate medium in the reduced state was supplied to the one electrode, and an intermediate medium in the reduced state CrO was oxidized to $Cr(OH)_3$ in an oxidized state, and the obtained $Cr(OH)_3$ was returned to the chemical conversion unit through a return pipe and reused. Note that, obtained $Cr(OH)_3$ may be taken out to the outside once and then reused in the chemical conversion unit as appropriate.

In the other electrode, water was used as a material to be reduced, water was reduced to produce $H_2$, and the $H_2$ was taken out to the outside. Electric power was extracted from the energization unit to the outside.

A reaction temperature in the electrochemical conversion unit was set to a room temperature (25°C).

<Demonstration of Progress of Reaction>

(Reaction between Brown Coal and $Cr^{3+}$: Gas Analysis)

Demonstration of the following reaction in which a Cr compound ($Cr^{(III)}$) having an oxidation number of 3 is reduced to a Cr compound having an oxidation number of 2 while oxidizing brown coal in the chemical conversion unit was performed by gas analysis.

$$CH_{0.84}O_{0.34} + 4.16Cr^{3+} + 1.66H_2O \rightarrow CO_2 + 4.16Cr^{2+} + 4.16H^+$$

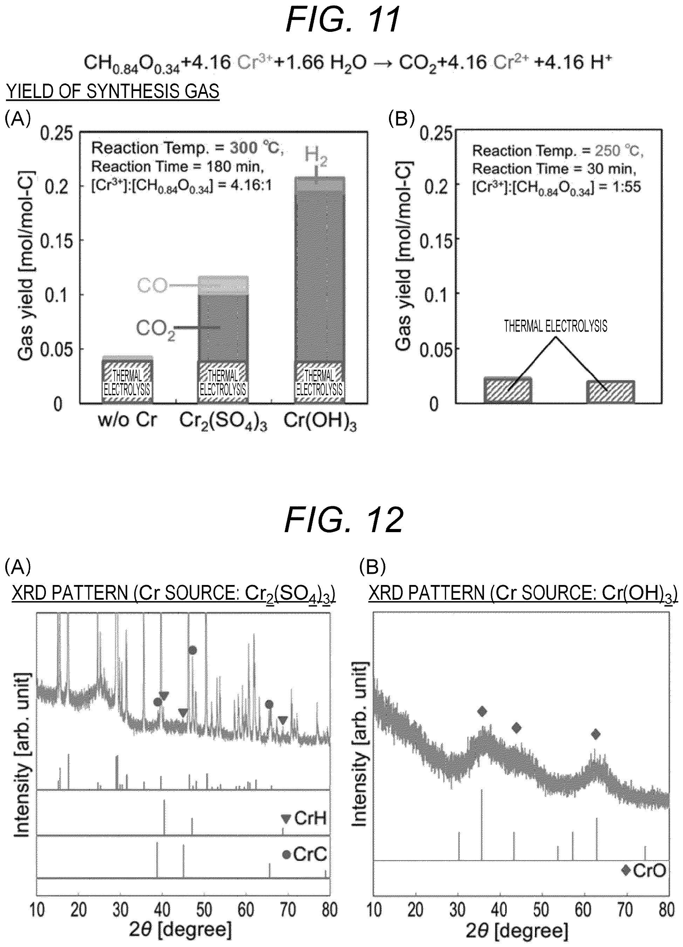

Fig. 11(A) is a bar graph illustrating a yield of a synthesis gas in a case where the chemical conversion unit is set to a reaction temperature of 300°C. In Fig. 11(A), results of the yield of the synthesis gas in a case of control without Cr compound, a case of $Cr_2(SO_4)_3$, and a case of $Cr(OH)_3$ were illustrated in this order from the left side of the drawing.

Fig. 11(B) is a bar graph illustrating the yield of the synthesis gas in a case where the chemical conversion unit is set to a reaction temperature of 250°C. In Fig. 11(B), the results of the yield of the synthesis gas in a case of $Cr_2(SO_4)_3$ and a case of $Cr(OH)_3$ were illustrated in this order from the left side of the drawing.

From Fig. 11(A) and Fig. 11(B), it was found that in a case where the chemical conversion unit is set to the reaction temperature of 300°C, a yield of $CO_2$ significantly increased from the reaction between brown coal and $Cr^{3+}$. In a case of $Cr(OH)_3$, generation of $H_2$ was confirmed. From these results, it was found that brown coal is oxidized by the Cr compound (Cr(III)) having an oxidation number of 3.

(Reaction between Brown Coal and $Cr^{3+}$: Analysis of Solid Product)

The chemical conversion unit was set to the reaction temperature of 300°C, and the following reaction in which the Cr compound (Cr(III)) having an oxidation number of 3 is reduced to the Cr compound having an oxidation number of 2 while oxidizing brown coal in the chemical conversion unit was demonstrated by analysis of a solid product.

$$CH_{0.84}O_{0.34} + 4.16Cr^{3+} + 1.66H_2O - CO_2 + 4.16Cr^{2+} + 4.16H^+$$

Fig. 12(A) is an XRD pattern of the solid product in a case of reducing $Cr_2(SO_4)_3$. From Fig. 12(A), it was found that CrH(I) and CrC(0) were generated.

Fig. 12(B) is an XRD pattern of the solid product in a case of reducing $Cr(OH)_3$. From Fig. 12(A), it was found that CrO(II) was generated.

From Fig. 12(A) and Fig. 12(B), it was found that in a case where the chemical conversion unit is set to the reaction temperature of 300°C, the yield of $CO_2$ significantly increases from the reaction between brown coal and $Cr^{3+}$. In a case of $Cr(OH)_3$, generation of $H_2$ was confirmed. From these results, it was found that in a case where the chemical conversion unit is set to the reaction temperature of 300°C, Cr(III) was reduced by brown coal.

<Evaluation Example 1>

In Evaluation Example 1, an example of a process using Cr(III) in the energy conversion system of Example 1 was evaluated by comparison with a combustion process. In Evaluation Example 1, a chemical conversion unit was provided with a waste heat supply means, and a process of being supplied with waste heat from the waste heat supply means was performed in the energy conversion system of Example 1.

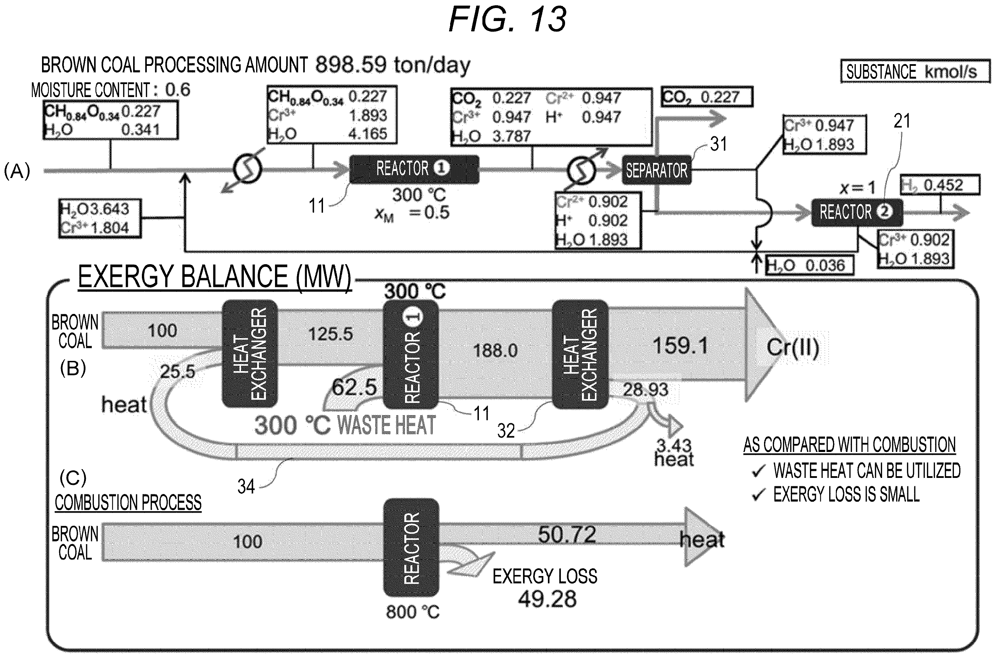

Fig. 13(A) is a schematic diagram of a material balance in Evaluation Example 1 of the energy conversion system of Example 1. Fig. 13(B) is a schematic diagram of an exergy balance in Evaluation Example 1 of the energy conversion system of Example 1. Note that, as illustrated in Fig. 13(B), the energy conversion system of Example 1 used in Evaluation Example 1 includes a heat return pipe 34.

In contrast, Fig. 13(C) is a schematic diagram of an example of an exergy balance in the combustion process.

From the results of Evaluation Example 1, it was found that the energy conversion system of Example 1 can use waste heat and has a small exergy loss as compared with the combustion process.

<Evaluation Example 2>

In Evaluation Example 2, an example of a process using Cr(III) in the energy conversion system of Example 1 was evaluated by comparison with a gasification process. In Evaluation Example 2 also, a chemical conversion unit was provided with a waste heat supply means, and a process of being supplied with waste heat from the waste heat supply means was performed in the energy conversion system of Example 1.

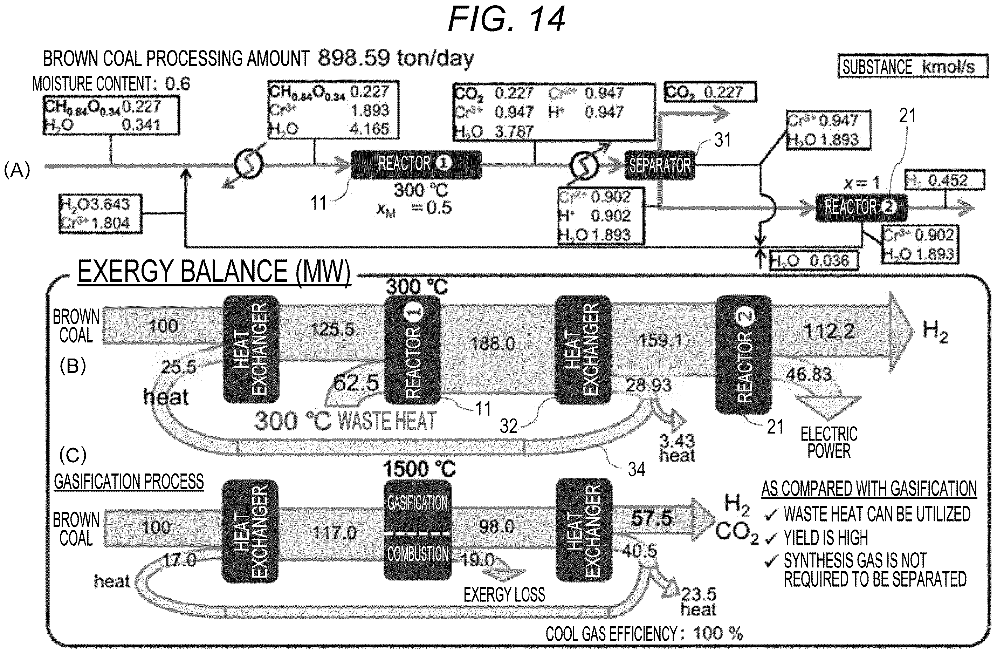

Fig. 14(A) is a schematic diagram of a material balance in Evaluation Example 1 of the energy conversion system of Example 1. Fig. 14(B) is a schematic diagram of an exergy balance in Evaluation Example 1 of the energy conversion system of Example 1.

In contrast, Fig. 14(C) is a schematic diagram of an example of an exergy balance in the gasification process.

From the results of Evaluation Example 2, it was found that the energy conversion system of Example 1 can use waste heat and has a large yield as compared with the gasification process. Furthermore, the energy conversion system of Example 1 was also found to be advantageous as compared with the gasification process in that there is no need to

separate nitrogen from $CO_2$ of a synthesis gas.

[Example 2]

Implementation of an energy conversion system of Example 2 capable of performing high-efficiency hydrogen production was examined.

The energy conversion system of Example 2 included a control unit capable of switching between (B-1) power generation during power shortage illustrated in Fig. 7 and (B-2) hydrogen production during power excess illustrated in Fig. 9, and other components were manufactured in a manner similar to the energy conversion system of Example 1. A demonstration experiment of the energy conversion system of Example 2 was performed according to the following procedure.

<(B-1) Demonstration of Power Generation during Power Shortage>

(Evaluation Example 3)

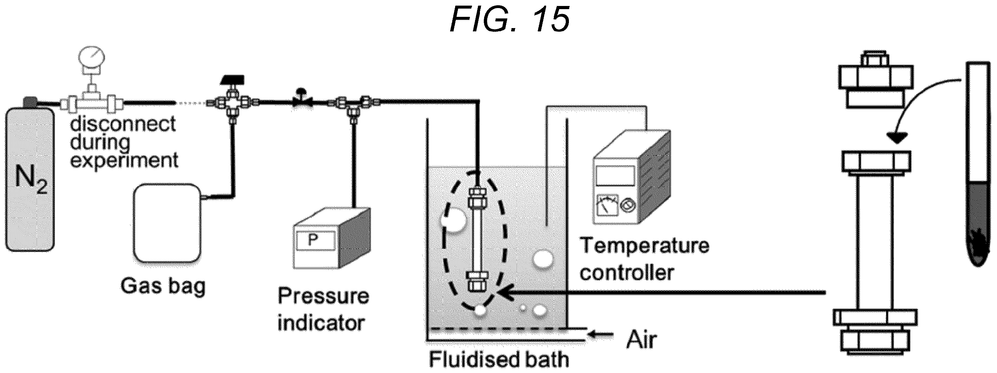

In Evaluation Example 3, an experimental device illustrated in Fig. 15 was used. Fig. 15 is a schematic diagram of the experimental device used in Evaluation Example 3 as a chemical conversion unit in the energy conversion system of Example 2.

Reaction conditions were set as follows.

Reaction temperature: 200°C or 250°C.

Reaction time: 10 to 180 minutes.

Pressure: 4 MPa.

Reaction liquid amount: 0.7 mL or 7 mL.

Intermediate medium: $VOSO_4$ aqueous solution.

Additive: $H_2SO_4$ aqueous solution.

Carbon source: brown coal (Loy Yang coal) or eucalyptus.

A gas analysis method was as follows.

Gas chromatography (Shimadzu, GC-12A)
Column: Porapak-Q, Molecular Sieve 5A
Detector: TCD, FID

A liquid analysis method was as follows.

UV-vis-NIR (Shimadzu, UV-3100PC)

A solid residual analysis method was as follows.

CHN (Yanako, MT-6)

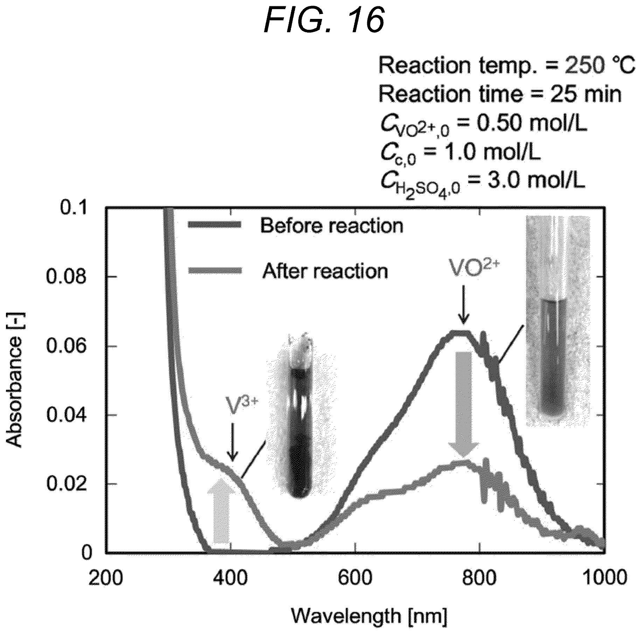

Fig. 16 is a photograph of a sample of the chemical conversion unit before and after the reaction under specific reaction conditions (in a case of a reaction time of 250°C, a reaction time of 25 minutes, an initial $VO^{2+}$ concentration $C_{VO^{2+},0} = 0.50$ mol/L, an initial carbon concentration $C_{c,0} = 1.0$ mol/L, and an initial $H_2SO_4$ concentration $C_{H2SO4,0} = 3.0$ mol/L) in Evaluation Example 3, and a graph of a relationship between a wavelength and absorbance. From Fig. 16, it was found that under this specific reaction condition, a $VO^{2+}$ ion having an oxidation number of 4, which is an intermediate medium in an oxidized state, is reduced to a $V^{3+}$ ion having an oxidation number of 3, which is an intermediate medium in a reduced state, in the chemical conversion unit, and the reaction proceeds. That is, the results in Fig. 16 suggested that the oxidation reaction of brown coal as a carbon source proceeds under this specific reaction condition.

Fig. 17(A) is a graph of a relationship between the reaction time and a conversion rate of $VO^{2+}$ ions Conversion,$X_{VO}^{2+}$ (unit: none) under some reaction conditions in Evaluation Example 3. Fig. 17(A) illustrated that in a case where biomass (eucalyptus) is used as the carbon source, the reduction reaction from the $VO^{2+}$ ion to the $V^{3+}$ ion proceeds even at 125°C, and the reaction proceeds at least at 125 to 200°C. It was found that in a case where brown coal is used as the carbon source, the reduction reaction from the $VO^{2+}$ ion to the $V^{3+}$ ion proceeds at 250°C, and the reaction proceeds at least at 125 to 200°C.

Fig. 17(B) is a graph of a relationship between the conversion rate of $VO^{2+}$ ions Conversion,$X_{VO}^{2+}$ and electrochemical conversion E (unit: V). Fig. 17(B) illustrated that even when the conversion rate of the $VO^{2+}$ ions Conversion,$X_{VO}^{2+}$ is as low as 0.2, a sufficient electromotive force of 0.86 V can be obtained in the electrochemical conversion unit at the subsequent stage. That is, it can be seen that a sufficient voltage can be obtained by the electrochemical conversion unit even in a state in which the reduction of the intermediate medium is insufficient.

(Evaluation Example 4: Cu and Biomass)

Evaluation Example 4 evaluated a case where an initial carbon concentration $C_{c,0}$ = 1.0 mol/L, 0.47 mol/L, or 0.30 mol/L when using a $Cu^{2+}$ ion in place of the $VO^{2+}$ ion as an intermediate medium, setting a reaction temperature to 300°C, a reaction time to 120 minutes, and an initial $Cu^{2+}$ concentration $C_{Cu^{2+},0}$ = 1.0 mol/L in Evaluation Example 3. In Evaluation Example 4, a solid product after the reaction was evaluated by XRD and a photograph, and a synthesis gas after the reaction was evaluated by gas analysis.

Note that, the reaction in which the $Cu^{2+}$ ion having an oxidation number of 2 is reduced to single Cu having an oxidation number of 0 while oxidizing biomass (cellulose) in the chemical conversion unit is as follows.

$$(C_6H_{10}O_5)_n + 7H_2O \rightarrow 6nCO_2 + 24nH^+ + 24ne^-$$

$$Cu^{2+} + 2e^- \rightarrow Cu$$

$$(C_6H_{10}O_5)_n + 7H_2O + 12nCu^{2+} \rightarrow 6nCO_2 + 24nH^+ + 12nCu$$

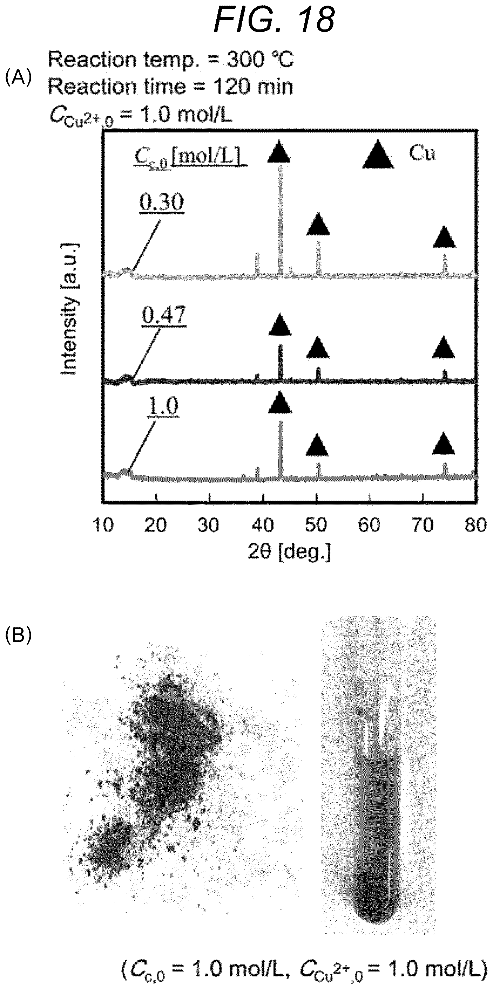

Fig. 18(A) is an XRD pattern of a solid product in Evaluation Example 4. Fig. 18(B) is a photograph of a solid product (solid residue) under specific conditions (in a case of initial $Cu^{2+}$ concentration $C_{Cu^{2+},0}$ = 1.0 mol/L, and initial carbon concentration $C_{c,0}$=1.0 mol/L) of Evaluation Example 4.

From Figs. 18(A) and 18(B), it was found that the $Cu^{2+}$ ion having an oxidation number of 2, which is an intermediate medium in an oxidized state, is reduced to single Cu having an oxidation number of 0, which is an intermediate medium in a reduced state, by biomass as a carbon source in the chemical conversion unit, and the reaction proceeds.

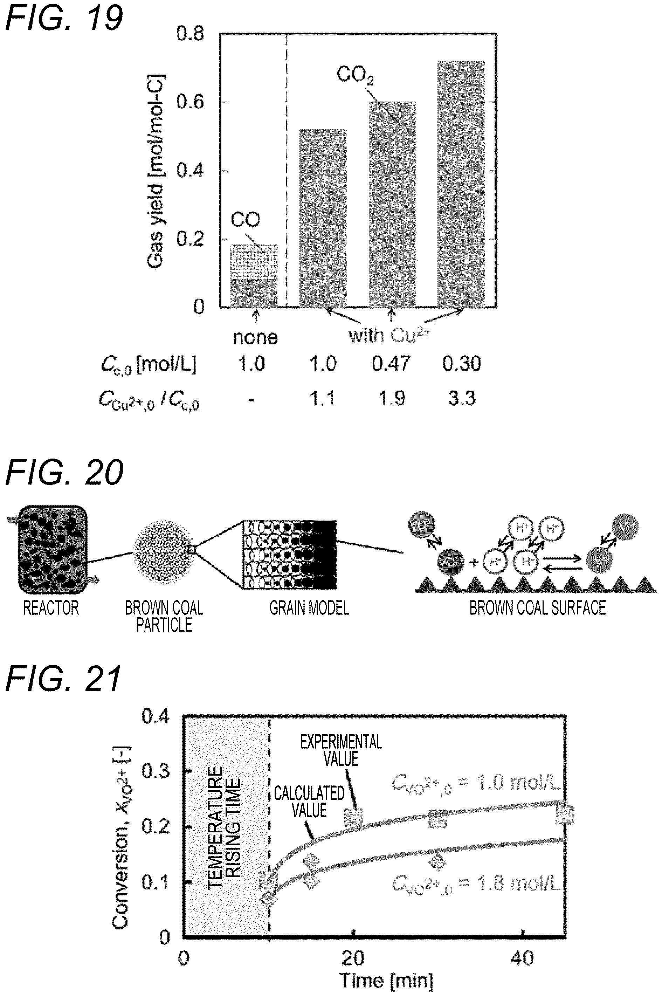

Fig. 19 is a bar graph illustrating the yield of a synthesis gas in Evaluation Example 4. From Fig. 19, it was found that in a case where the chemical conversion unit was set to a reaction temperature of 300°C, $Cu^{2+}$ was reduced to Cu, while biomass was oxidized to $CO_2$. Note that, a stoichiometric ratio of $Cu^{2+}$ to $CO_2$ in the above reaction is 2.

The reaction temperatures corresponding to a solid fuel (carbon source) species and a medium (intermediate medium) species in the chemical conversion unit in the above evaluation examples are illustrated in following Table 3. From following Table 3, it is found that it is possible to utilize waste heat at a low temperature such as 350°C or lower in various combinations of the carbon source and the intermediate medium.

[Table 3]

| Correspondence diagram | Solid fuel | Medium | | Temperature [°C] |
| --- | --- | --- | --- | --- |
| | | Before reduction | After reduction | |
| Figs. 16, 17 | Eucalyptus, brown coal | V (IV) | V (III) | 125 to 250 |
| Figs. 18, 19 | Cellulose | Cu (II) | Cu (0) | 300 |
| Figs. 11, 12 | Brown coal | Cr (III) | Cr (II), Cr (I), Cr (0) | 300 |

(Evaluation Example 5)

In Evaluation Example 5, a reaction rate was evaluated in a case where the reaction temperature was set to 250°C, the initial $VO^{2+}$ concentration $C_{VO^{2+},0}$ = 1.0 mol/L or 1.8 mol/L, the initial carbon concentration $C_{c,0}$ = 1.8 mol/L, and the initial $H_2SO_4$ concentration $C_{H2SO4,0}$ = 3.0 mol/L in Evaluation Example 3.

Fig. 20 is a schematic diagram of a model used for reaction rate analysis in Evaluation Example 5. A calculated value of a reaction rate $r_{VO^{2+}}$ was calculated by the model illustrated in Fig. 20 on the basis of following formula.

[Math. 1]

$$-r_{VO^{2+}} = \underbrace{\frac{k_r(C_{VO^{2+}}C_{H^+}^2 - C_{V^{3+}}/K)}{(1 + K_{V^{3+}}C_{V^{3+}})^3}}_{\substack{\text{Reaction rate per surface area of brown coal} \\ \text{[mol/(min m}^2\text{)]}}} \underbrace{C_{C,0}}_{\substack{\text{Initial surface area of brown coal} \\ \text{[m}^2\text{-initial/m}^3\text{]}}} \underbrace{(1 + \frac{1 - \varepsilon_0}{\varepsilon_0}x_C)\left[\frac{\ln\{\varepsilon_0 + (1 - \varepsilon_0)x_C\}}{\ln\varepsilon_0}\right]^{\frac{2}{3}}}_{\substack{\text{Change in brown coal surface area associated with reaction} \\ \text{[m}^2\text{/m}^2\text{-initial]}}}$$

$$k_r = 0.335 \ \text{L}^3/(\text{mol}^2 \ \text{mol-C min})$$

$$k_{V3+} = 60.9 \ \text{L/mol}$$

$$K = 0.00129 \ \text{L}^2/\text{mol}^2$$

$$\varepsilon_0 = 0.15$$

In Fig. 21, experimental values in the demonstration experiment are plotted on a graph in which a relationship between the reaction time and a conversion rate of $VO^{2+}$ ions Conversion, $X_{VO}{}^{2+}$ is described on the basis of the calculated value of the reaction rate in Evaluation Example 5. From Fig. 21, it was found that the experimental value and the calculated value were favorably coincide with each other. That is, it was suggested that under this specific reaction condition, the $VO^{2+}$ ion having an oxidation number of 4, which is an intermediate medium in an oxidized state, is reduced to the $V^{3+}$ ion having an oxidation number of 3, which is an intermediate medium in a reduced state, in the chemical conversion unit, and the oxidation reaction of brown coal, which is the carbon source, proceeds.

(Evaluation Example 6)

In the energy conversion system of Example 2, a reactor size in the process using brown coal and $VO^{2+}$ ion was calculated.

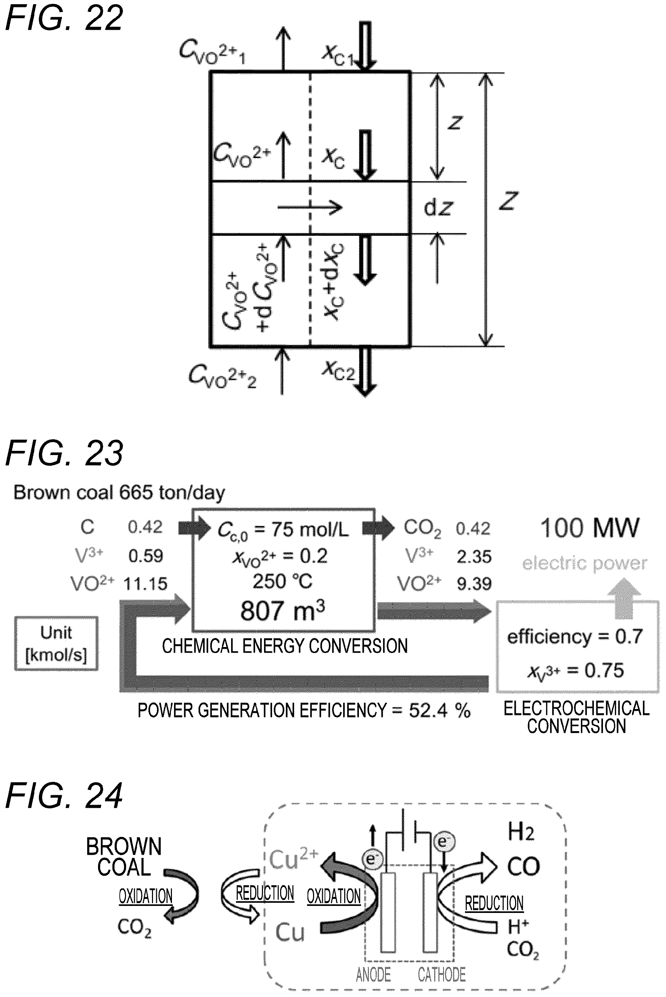

Fig. 22 is a schematic diagram of a reactor design in the chemical conversion unit used in Evaluation Example 6. The reactor used was an isothermal moving bed reactor. An extruded flow was implemented in both a liquid phase and a solid phase. The reactor used includes a structure capable of making a solid carbon source to react in a solution containing an intermediate medium in an oxidized state. Z was designed on the basis of a following formula.

[Math. 2]

$$Z = \frac{G_S w_C}{M_C} \int_{x_{C1}}^{x_{C2}} \frac{dx_C}{-r_{Cb}}$$

wherein mass velocity Gs based on an empty cylinder: 3.2 [kg/(m²s)];
carbon mass fraction in brown coal wc: 0.654 [unit: none];
molecular weight Mc of carbon: 0.012 [kg/mol]; and
empty cylinder velocity uL of liquid: 2 [m/s].

Fig. 23 is a schematic diagram illustrating a material balance (unit: kmol/s), power generation efficiency, and a reactor size at that time in Evaluation Example 6 of the energy conversion system of Example 2. In Fig. 23, the reactor size was 807 m³ in a case where the initial carbon concentration $C_{c,0}$= 75 mol/L, the conversion rate of $VO^{2+}$ ions $X_{VO}{}^{2+}$ = 0.2, the reaction temperature was set to 250°C, and it is operated in such a manner that power of 100 MW was obtained at a power generation efficiency of 52.4%. This is about the same as the size of a boiler having the same scale of power generation capacity, and it can be seen that this is a sufficiently feasible size. In Fig. 23, the electrochemical conversion in the electrochemical conversion unit was calculated while setting the conversion rate of $V^{3+}$ ions $X_V{}^{3+}$ = 0.75 and efficiency (efficiency) = 0.7.

<(B-2) Demonstration of Hydrogen Production during Power Excess>

(Evaluation Example 7)

In Evaluation Example 7, hydrogen production during power excess was demonstrated by an electrolytic reaction (indirect method) using brown coal and Cu. Fig. 24 is a schematic diagram of the energy conversion system used in Evaluation Example 7. In Evaluation Example 7, an electrochemical conversion unit includes an additional power supply means, additional power is supplied from the additional power supply means, and an electrochemical conversion unit performed a process of taking out a reductant ($H_2$) of a material to be reduced (water) to the outside in the system of Example 2. A reaction formula of the electrochemical conversion unit in Evaluation Example 7 is as follows.

$$\text{Anode: } Cu \rightarrow Cu^{2+} + 2e^- \quad E0 = 0.337 \text{ V}$$

$$\text{Cathode: } 2H^+ + 2e^- \rightarrow H_2 \quad E0 = 0 \text{ V}$$

$$Cu + 2H^+ \rightarrow Cu^{2+} + H_2$$

$$\Delta H_{r,0} = 64.9 \text{ KJ/mol}$$

$$\Delta G_{r,0} = 65.5 \text{ KJ/mol}$$

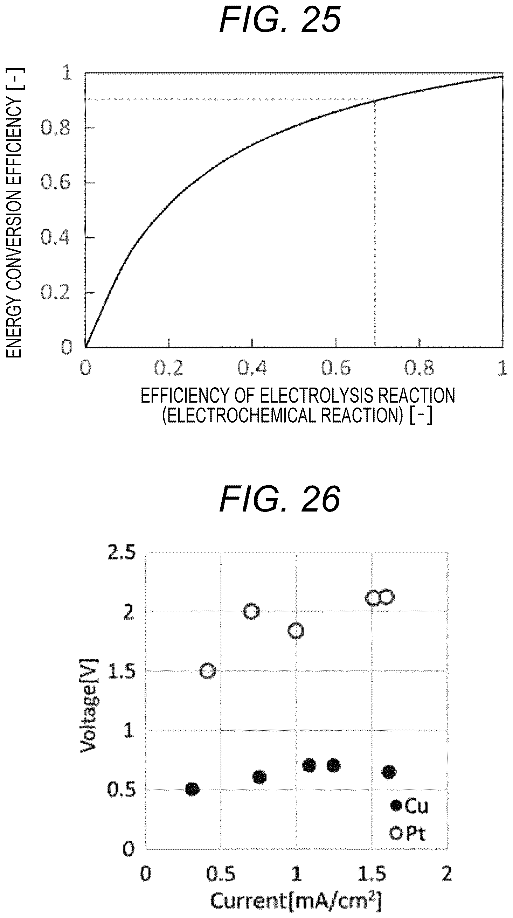

Fig. 25 is a graph illustrating a relationship between efficiency of the electrolytic reaction and the energy conversion efficiency of the energy conversion system used in Evaluation Example 7.

Energy conversion efficiency = $H_2$ combustion heat [KJ]/(combustion heat of reacted brown coal + amount of power actually added in electrolytic reaction) [KJ] Efficiency of electrolytic reaction = minimum thermodynamically required energy [KJ]/ amount of power actually added in electrolysis reaction [KJ]

From Fig. 25, it can be seen that the overall energy conversion efficiency is 90% in a case where the operation is performed with the general efficiency of electrochemical reaction of 70%.

(Evaluation Example 8)

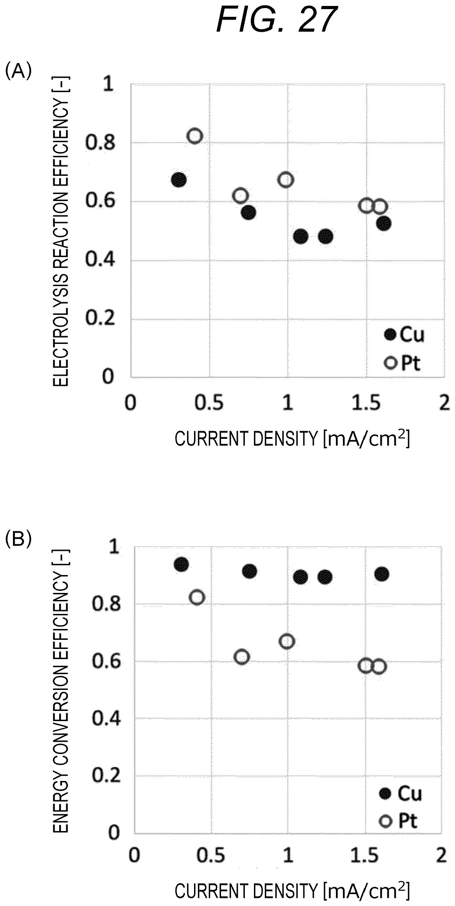

In Evaluation Example 8, an example of a hydrogen production process by an electrolytic reaction using brown coal and Cu in the energy conversion system of Example 2 was compared with a hydrogen production process in a conventional method by an electrolytic reaction of water using a Pt electrode, and evaluation was performed.
Voltages required to achieve the same current density (same hydrogen production rate) in each process were measured and illustrated in Fig. 26. Fig. 26 is a graph illustrating a relationship between the current density and the voltage in a case of producing hydrogen by the energy conversion system of Example 2 and the conventional method.
Furthermore, the efficiency of the electrolytic reaction and the energy conversion efficiency at the same current density (same hydrogen production rate) in each process were calculated and illustrated in Figs. 27(A) and 27(B). Fig. 27(A) is a graph illustrating a relationship between the current density and the efficiency of the electrolytic reaction in a case of producing hydrogen by the energy conversion system of Example 2 and the conventional method. Fig. 27(B) is a graph illustrating a relationship between the current density and the energy conversion efficiency in a case of producing hydrogen by the energy conversion system of Example 2 and the conventional method.
From Figs. 26 and 27(B), it was found that the energy conversion system of Example 2 has an energy conversion efficiency of about 90%, and has a higher energy conversion efficiency than that of the hydrogen production process in the conventional method. It was also found that the energy conversion system of Example 2 required a lower voltage as compared to the hydrogen production process in the conventional method.
Note that, from Fig. 27(A), in the energy conversion system of Example 2, the efficiency of the electrolytic reaction was about the same as that in the hydrogen production process in the conventional method.

(Evaluation Example 9)

In Evaluation Example 9, electrolytic solutions in which the concentration of $VO^{2+}$ ions and the concentration of $V^{3+}$ ions as intermediate media in the chemical conversion unit were adjusted were prepared by the method similar to that in Evaluation Example 5, and then each electrolytic solution was brought into contact with an anode, and air was supplied to a cathode to confirm electromotive force and overall power generation efficiency. A cell configuration in the electrochemical conversion unit was as illustrated in Table 4 below.

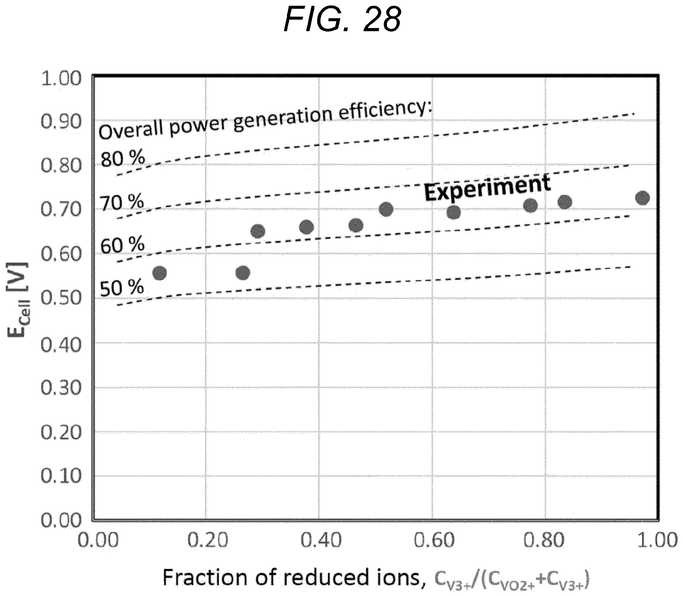

Fig. 28 is a graph illustrating a relationship of a battery voltage ($E_{Cell}$ [V]) and the overall power generation efficiency with respect to a ratio ($C_{V3+}/(C_{VO2+} + C_{V3+})$) of $C_{V3+}$ to the total amount of the $VO^{2+}$ ion concentration ($C_{VO2+}$) having an oxidation number of 4, which is the intermediate medium in the oxidized state, and the $V^{3+}$ ion concentration ($C_{V3+}$) having an oxidation number of 3, which is a metal-containing material intermediate medium in the reduced state.

From Fig. 28, it can be seen that sufficient battery voltage and power generation efficiency can be obtained even in a case where $C_{V3+}/(C_{VO2+} + C_{V3+})$ is small, that is, a reduction rate is small.

(Evaluation Example 10) In Evaluation Example 10, electrolytic solutions in which the concentration of $VO^{2+}$ ions and the concentration of $V^{3+}$ ions as intermediate media in the chemical conversion unit were adjusted were prepared as in Evaluation Example 9, and then each electrolytic solution was brought into contact with an anode, air was supplied to a cathode to generate power, and a change in current value and voltage value at the time of power generation was measured. A cell configuration in the electrochemical conversion unit was as illustrated in Table 4 below.

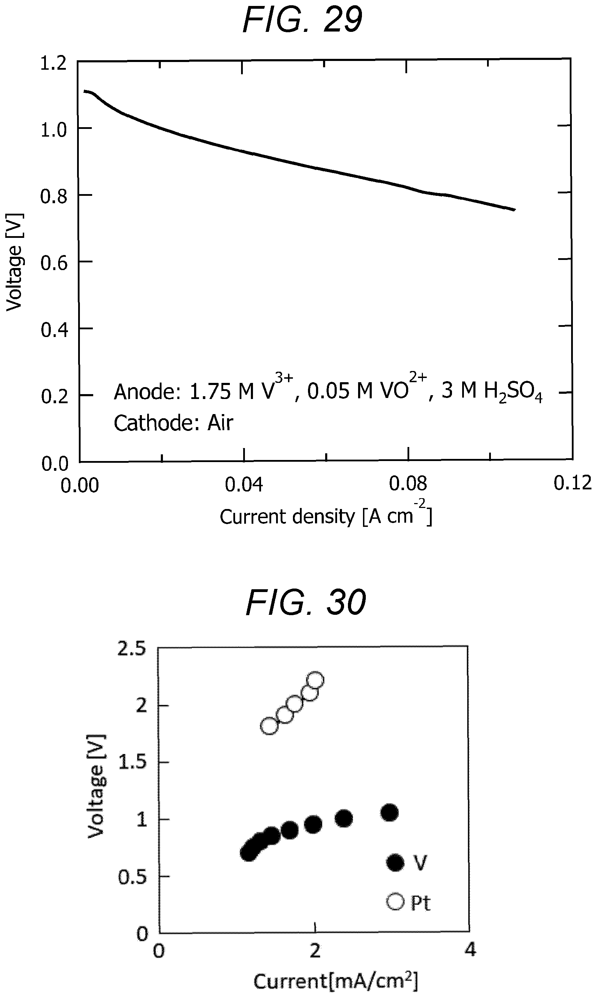

Fig. 29 is a graph (I-V curve) illustrating a relationship between a current (I) and a voltage (V) during power generation in Evaluation Example 10.

From Fig. 29, it can be seen that there is no problem in power generation characteristics even in a state in which $YO^{2+}$ ions are not completely reduced to $V^{3+}$ ions.

(Evaluation Example 11)

In Evaluation Example 11, an example of a hydrogen production process by an electrolytic reaction using brown coal and V as an intermediate medium in the system of Example 2 was compared with a hydrogen production process in a conventional method by an electrolytic reaction of water using a Pt electrode, and evaluation was performed. The cell configuration, medium and counter electrode (cathode) feed were as illustrated in Table 4 below.

Voltages required to achieve the same current density (same hydrogen production rate) in each process were measured and illustrated in Fig. 30. Fig. 30 is a graph illustrating a relationship between the current density and the voltage in a case of producing hydrogen by the system of Example 2 and the conventional method in Evaluation Example 11.

From Fig. 30, it can be seen that even in a case where V is used as the intermediate medium, the system of Example 2 has a large current density even at a low voltage as compared with the hydrogen production process in the conventional method, and is suitable for highly efficient hydrogen production.

A generation energy form, the cell configuration, the medium, the cathode feed, the applied voltage, and the temperature at the time of power generation or hydrogen production in Figs. 26 to 30 (Evaluation Example 8 to 11) are illustrated in Table 4.

[Table 4]

| Correspondence diagram | Generation energy form | Cell configuration | | | Medium (anode) | | Counter electrode (cathode) feed | Applied voltage [V] | Temperature |
|---|---|---|---|---|---|---|---|---|---|
| | | Anode | Cathode | Electrolyte membrane | - Before oxidation | After oxidation | | | |
| Fig. 28 | Electric power | Graphite | Platinum-carrying carbon | Nafion™ | V (III) | V (IV) | Air | 0 | Room temperature |
| Fig. 29 | Electric power | Carbon paper | Platinum-carrying carbon | Nafion™ | V (III) | V (IV) | Air | 0 | Room temperature |
| Fig. 30 | Hydrogen | Carbon paper | Carbon paper | SELEMION$^R$ | V (III) | V (IV) | Water | 0.6 to 1.0 | Room temperature |
| Figs. 26, 27 | Hydrogen | Cupper (medium) | Carbon paper | SELEMION$^R$ | Cu (0) | Cu (II) | Water | 0.5 to 0.7 | Room temperature |

Reference Signs List

1    Carbon source

2    Intermediate medium in oxidized state

3    Intermediate medium in reduced state

4    Material to be reduced

5    Reductant

6    Electric power

7    Surplus power

11    Chemical conversion unit

21    Electrochemical conversion unit

22    One electrode

23    Other electrode

24    Energization unit

31    Recovery unit

32    Heat exchange unit

33    Waste heat supply means

34    Heat return pipe

41    Control unit

42    Additional power supply means

## Claims

1. A method for generating power or producing hydrogen from a carbon source, the method comprising:

   a chemical conversion step of making, in a chemical conversion unit, a mixture obtained by mixing a solution containing an intermediate medium with the carbon source to react at a temperature at which chemical exergy of the carbon source exceeds chemical exergy in a reduced state of the intermediate medium to reduce the intermediate medium while oxidizing the carbon source;
   an electrochemical conversion step of bringing a solution containing the intermediate medium reduced at the chemical conversion step into contact with an anode of a battery structure in an electrochemical conversion unit including the battery structure, or using a base material on which the intermediate medium reduced at the chemical conversion step is precipitated as the anode of the battery structure, and bringing oxygen or air into contact with a cathode of the battery structure to generate power, or bringing water into contact to produce hydrogen; and
   a reuse step of returning a solution containing the intermediate medium after the electrochemical conversion step to the mixture.

2. The method for generating power or producing hydrogen according to claim 1, wherein at the chemical conversion step, the intermediate medium in the reduced state is precipitated on the base material, and at the electrochemical conversion step, the base material on which the intermediate medium is precipitated is used as the anode of the battery structure in the electrochemical conversion unit.

3. The method for generating power or producing hydrogen according to claim 1 or 2, wherein a reaction temperature at the chemical conversion step is 350°C or lower.

4. The method for generating power or producing hydrogen according to claim 1 or 2, wherein the intermediate medium contains at least one element out of V, Cr, Mn, Fe, Cu, or Zn.

5. The method for generating power or producing hydrogen according to claim 1 or 2, wherein $CO_2$ generated by an oxidation reduction reaction in the chemical conversion unit is recovered.

6. An energy conversion system comprising:

a chemical conversion unit that reduces an intermediate medium from an oxidized state to a reduced state while oxidizing a carbon source; and
an electrochemical conversion unit that includes one electrode, the other electrode, and an energization unit that connects the one electrode and the other electrode, and reduces a material to be reduced at the other electrode while oxidizing the intermediate medium from a reduced state to an oxidized state at the one electrode, wherein in the chemical conversion unit, a reduction reaction is performed at a temperature at which chemical exergy of the carbon source exceeds chemical exergy in the reduced state of the intermediate medium, and
the electrochemical conversion unit outputs at least one of a reductant of the material to be reduced and electric power to outside.

7. The energy conversion system according to claim 6, comprising: at least one of a plurality of chemical conversion units or a plurality of electrochemical conversion units.

8. The energy conversion system according to claim 6, comprising: a plurality of electrochemical conversion units, wherein a part of the electrochemical conversion units outputs hydrogen as the material to be reduced to the outside, another part of the electrochemical conversion units outputs electric power to the outside, and the electric power is used as auxiliary power for outputting the hydrogen to the outside.

9. The energy conversion system according to claim 6, wherein $CO_2$ generated by an oxidation reduction reaction in the chemical conversion unit is recovered.

## FIG. 1

## FIG. 2

(A) WASTE HEAT CONVERSION

## FIG. 3

## FIG. 4

(A)

# FIG. 5

# FIG. 6

(a)

(b)

# FIG. 7

(B-1) POWER GENERATION
DURING POWER SHORTAGE

# FIG. 8

(B-1) DURING POWER SHORTAGE

# FIG. 9

(B-2) HYDROGEN PRODUCTION
DURING POWER EXCESS

# FIG. 10

(B-2) DURING POWER EXCESS

CONVERSION EFFICIENCY TO $H_2$

CONVENTIONAL METHOD:
BIOMASS, BROWN COAL → GASFICATION
SURPLUS POWER → WATER ELECTROLYSIS

EP 4 557 412 A1

# FIG. 11

$$CH_{0.84}O_{0.34}+4.16\ Cr^{3+}+1.66\ H_2O \rightarrow CO_2+4.16\ Cr^{2+}+4.16\ H^+$$

YIELD OF SYNTHESIS GAS

(A)

Reaction Temp. = 300 °C,
Reaction Time = 180 min,
$[Cr^{3+}]:[CH_{0.84}O_{0.34}] = 4.16:1$

$H_2$

CO

$CO_2$

THERMAL ELECTROLYSIS

w/o Cr   $Cr_2(SO_4)_3$   $Cr(OH)_3$

(B)

Reaction Temp. = 250 °C,
Reaction Time = 30 min,
$[Cr^{3+}]:[CH_{0.84}O_{0.34}] = 1:55$

THERMAL ELECTROLYSIS

# FIG. 12

(A)
XRD PATTERN (Cr SOURCE: $Cr_2(SO_4)_3$)

▼CrH
●CrC

$2\theta$ [degree]

(B)
XRD PATTERN (Cr SOURCE: $Cr(OH)_3$)

◆CrO

$2\theta$ [degree]

34

# FIG. 13

BROWN COAL PROCESSING AMOUNT **898.59 ton/day**

MOISTURE CONTENT : 0.6

SUBSTANCE kmol/s

(A)

| $CH_{0.84}O_{0.34}$ 0.227 |
| $H_2O$ 0.341 |

| $CH_{0.84}O_{0.34}$ 0.227 |
| $Cr^{3+}$ 1.893 |
| $H_2O$ 4.165 |

REACTOR ① 300 °C $x_M$ = 0.5

11

| $CO_2$ 0.227  $Cr^{2+}$ 0.947 |
| $Cr^{3+}$ 0.947  $H^+$ 0.947 |
| $H_2O$ 3.787 |

$CO_2$ 0.227

SEPARATOR 31

| $Cr^{3+}$ 0.947 |
| $H_2O$ 1.893 |

21

| $Cr^{2+}$ 0.902 |
| $H^+$ 0.902 |
| $H_2O$ 1.893 |

$x = 1$

REACTOR ② $H_2$ 0.452

| $Cr^{3+}$ 0.902 |
| $H_2O$ 1.893 |

| $H_2O$ 3.643 |
| $Cr^{3+}$ 1.804 |

$H_2O$ 0.036

## EXERGY BALANCE (MW)

**300 °C**

(B)

BROWN COAL — 100 — HEAT EXCHANGER — 125.5 — REACTOR ① — 188.0 — HEAT EXCHANGER — 159.1 — Cr(II)

25.5 heat

62.5

300 °C WASTE HEAT

11

32

28.93

3.43 heat

34

AS COMPARED WITH COMBUSTION
- ✓ WASTE HEAT CAN BE UTILIZED
- ✓ EXERGY LOSS IS SMALL

(C) COMBUSTION PROCESS

BROWN COAL — 100 — REACTOR — 50.72 — heat

EXERGY LOSS 49.28

800 °C

EP 4 557 412 A1

# FIG. 14

SUBSTANCE  kmol/s

## (A)

BROWN COAL PROCESSING AMOUNT  898.59 ton/day
MOISTURE CONTENT: 0.6

| $CH_{0.84}O_{0.34}$ | 0.227 |
| $H_2O$ | 0.341 |

| $CH_{0.84}O_{0.34}$ | 0.227 |
| $Cr^{3+}$ | 1.893 |
| $H_2O$ | 4.165 |

| $CO_2$ | 0.227 | $Cr^{2+}$ | 0.947 |
| $Cr^{3+}$ | 0.947 | $H^+$ | 0.947 |
| $H_2O$ | 3.787 | | |

$CO_2$  0.227

| $Cr^{3+}$ 0.947 |
| $H_2O$ 1.893 |

21

| $H_2O$ 3.643 |
| $Cr^{3+}$ 1.804 |

REACTOR ①   300 °C   $x_M = 0.5$

11

SEPARATOR   31

| $Cr^{2+}$ 0.902 |
| $H^+$ 0.902 |
| $H_2O$ 1.893 |

$x=1$   REACTOR ②   $H_2$ 0.452

$H_2O$ 0.036

| $Cr^{3+}$ 0.902 |
| $H_2O$ 1.893 |

## (B) EXERGY BALANCE (MW)

BROWN COAL  100  → HEAT EXCHANGER  125.5  → REACTOR ① 300 °C  188.0  → HEAT EXCHANGER  159.1  → REACTOR ②  112.2  → $H_2$

25.5 heat

62.5  300 °C WASTE HEAT  11  32

28.93  →  3.43 heat  34

46.83  → ELECTRIC POWER  21

## (C) GASIFICATION PROCESS

BROWN COAL  100  → HEAT EXCHANGER  117.0  → GASIFICATION / COMBUSTION 1500 °C  98.0  → HEAT EXCHANGER  57.5  → $H_2$ $CO_2$

17.0 heat

19.0  → EXERGY LOSS

40.5  → 23.5 heat

COOL GAS EFFICIENCY : 100 %

### AS COMPARED WITH GASIFICATION
✓ WASTE HEAT CAN BE UTILIZED
✓ YIELD IS HIGH
✓ SYNTHESIS GAS IS NOT REQUIRED TO BE SEPARATED

# FIG. 15

EP 4 557 412 A1

## FIG. 16

Reaction temp. = 250 °C
Reaction time = 25 min
$C_{VO^{2+},0}$ = 0.50 mol/L
$C_{c,0}$ = 1.0 mol/L
$C_{H_2SO_4,0}$ = 3.0 mol/L

# FIG. 17

# FIG. 18

(A) Reaction temp. = 300 °C
Reaction time = 120 min
$C_{Cu^{2+},0}$ = 1.0 mol/L

(B)

($C_{c,0}$ = 1.0 mol/L, $C_{Cu^{2+},0}$ = 1.0 mol/L)

*FIG. 19*

*FIG. 20*

REACTOR   BROWN COAL PARTICLE   GRAIN MODEL   BROWN COAL SURFACE

*FIG. 21*

## FIG. 22

## FIG. 23

Brown coal 665 ton/day

| Unit [kmol/s] | | |
| --- | --- | --- |
| C | 0.42 | |
| $V^{3+}$ | 0.59 | |
| $VO^{2+}$ | 11.15 | |

$C_{c,0} = 75$ mol/L
$x_{VO^{2+}} = 0.2$
250 °C
**807 m³**

CHEMICAL ENERGY CONVERSION

| $CO_2$ | 0.42 |
| --- | --- |
| $V^{3+}$ | 2.35 |
| $VO^{2+}$ | 9.39 |

**100 MW**
electric power

efficiency = 0.7
$x_{V^{3+}} = 0.75$

POWER GENERATION EFFICIENCY = 52.4 %

ELECTROCHEMICAL CONVERSION

## FIG. 24

## FIG. 25

## FIG. 26

# FIG. 27

(A)

(B)

*FIG. 28*

## FIG. 29

Anode: 1.75 M $V^{3+}$, 0.05 M $VO^{2+}$, 3 M $H_2SO_4$
Cathode: Air

## FIG. 30

## INTERNATIONAL SEARCH REPORT

| International application No. |
|---|
| **PCT/JP2023/025852** |

**A. CLASSIFICATION OF SUBJECT MATTER**

*H01M 8/18*(2006.01)i; *C01B 3/04*(2006.01)i; *C25B 1/04*(2021.01)i; *C25B 9/00*(2021.01)i; *H01M 8/00*(2016.01)i
FI: H01M8/18; C01B3/04 R; C25B1/04; C25B9/00 A; H01M8/00 Z

According to International Patent Classification (IPC) or to both national classification and IPC

**B. FIELDS SEARCHED**

Minimum documentation searched (classification system followed by classification symbols)

H01M8/18; C01B3/04; C25B1/04; C25B9/00; H01M8/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | 蘆田隆一,金子創太,河瀬元明. 熱機関を利用しない新規高効率低品位炭バイオマス発電. 石炭科学会議発表論文集. vol. 57, 09 November 2020, pp. 26, 27, (ASHIDA, Ryuichi, KANEKO, Sota, KAWASE, Motoaki. Novel Highly-Efficient Power Generation from Low-Rank Coals or Biomass without Utilizing Heat Engines. Proceedings of Conference on Coal Science.) <br> pp. 26, 27, fig. 1 | 1, 3-9 |
| X | 蘆田隆一. 化学エネルギー変換と電気化学反応を組み合わせたバイオマスからの高効率発電. 科学研究費助成金事業 研究成果報告書. 09 June 2021, (ASHIDA, Ryuichi. Highly-efficient power generation from biomass by combining chemical energy conversion and electrochemical reaction), non-official translation (Grant-in-Aid for Scientific Research, Final Research Report.) <br> pp. 1-5, fig. 2, table 1 | 1, 3-9 |
| A | WO 2013/084825 A1 (BIO PHOTO CHEMONICS LAB K.K.) 13 June 2013 (2013-06-13) <br> claims | 1-9 |
| A | JP 2021-115569 A (TANMACHI, Kenji) 10 August 2021 (2021-08-10) <br> claims | 1-9 |

☐ Further documents are listed in the continuation of Box C. ☑ See patent family annex.

| | |
|---|---|
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **19 September 2023** | **03 October 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

| International application No. |
|---|
| **PCT/JP2023/025852** |

| Patent document cited in search report | | | Publication date (day/month/year) | Patent family member(s) | | | Publication date (day/month/year) |
|---|---|---|---|---|---|---|---|
| WO | 2013/084825 | A1 | 13 June 2013 | US claims | 2014/0349200 | A1 | |
| JP | 2021-115569 | A | 10 August 2021 | JP claims | 6739680 | B1 | |
| | | | | US claims | 2021/0308623 | A1 | |
| | | | | WO | 2021/149176 | A1 | |
| | | | | EP | 3889110 | A1 | |
| | | | | CN | 113439071 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011208242 A **[0012]**
- JP 5170401 A **[0012]**
- JP 10251001 A **[0012]**
- JP 2008137864 A **[0012]**
- JP 2016121036 A **[0012]**